# EUROPEAN PATENT SPECIFICATION

(11) **EP 2 667 677 B1**
(45) Date of publication and mention of the grant of the patent: **01.02.2017**
(21) Application number: 12747215.7
(22) Date of filing: 17.02.2012
(51) Int. Cl.: H04W 76/02

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 18.02.2011 CN 201110040581
(43) Date of publication of application: 27.11.2013
(73) Proprietor: Huawei Technologies Co., Ltd., Shenzhen, Guangdong 518129 (CN)
(72) Inventor: ZHANG, Yong, Shenzhen Guangdong 518129 (CN)
(74) Representative: Epping - Hermann - Fischer
(86) International application number: PCT/CN2012/071277
(87) International publication number: WO 2012/110005

(56) References cited:
- WO-A2-2009/151872
- CN-A- 101 400 153
- CN-A- 101 919 303
- US-A1- 2006 025 141
- US-A1- 2010 080 198
- US-A1- 2010 311 416
- US-A1- 2010 311 416
- US-B1- 6 353 660

## Description

### Field of the Invention

The present invention relates to the field of communications, and more particularly to a communication method and a communication apparatus.

### Background of the Invention

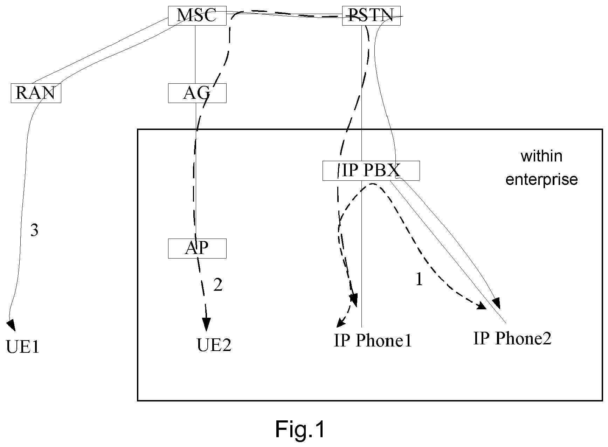

In short, a PBX (Private Branch eXchange) is a centralized telephone managing system that is widely applied in the offices of enterprises and greatly enhances business efficiency of enterprises. The IP PBX system unifies the telephone network and the computer network into an integrated whole, and various telephone terminals within the system employ the IP protocol to communicate, whereby is realized e-working within a local area network. See communication link 1 shown in Fig. 1, where two user equipments, such as two IP phones, inside an enterprise can communicate with each other under the IP PBX system.

If UE1 (User Equipment 1) outside an enterprise intends to communicate with a fixed line telephone terminal IP Phone1 inside the enterprise, a communication link therebetween should be created through RAN (Radio Access Network), MSC (Mobile Switching Center), PSTN (Public Switched Telephone Network), and IP PBX - see communication link 3 shown in Fig. 1.

Besides, in radio communication, an enterprise network may have plural APs (Access Points), and each AP accesses the core network via an AG (Access Gateway). However, even if UE2 is inside the enterprise, communication with fixed line telephone IP Phone2 inside the enterprise can be realized only through the MSC outside the enterprise, like the case of communication link 3, by creating communication link 2 shown in Fig. 1, namely UE2<->AP<->AG<->MSC<->PSTN<->IP PBX<->IP Phone, whereby the call path is made tortuous, thus causing waste of communication resources.

US 2010/0080198 A1 discloses a communication system, which includes a private cellular base station subsystem to communicate, using a cellular radio frequency air radio interface, with home cellular wireless devices and visiting cellular wireless devices located within a coverage area associated with the private cellular base station subsystem. Each of the home cellular wireless devices has associated therewith (i) a public cellular number from a home public land mobile network, and (ii) a private cellular number from a private branch exchange (PBX) numbering scheme. The communication system further includes a private cellular switching subsystem to provide cellular switching functionality within the communication system for the home cellular wireless devices in connection with sessions that are associated with the respective private cellular numbers of the respective home cellular wireless devices. The private cellular switching subsystem is coupled to Internet Protocol (IP) devices, each of the IP devices having an associated extension number from the PBX numbering scheme. The private cellular switching subsystem is used to provide PBX services to the home wireless devices and IP devices. US 6,353,660 B1 discloses a call screening method, which allows a subscriber to screen calls made to the subscriber from callers using the PSTN while the subscriber uses another communications medium. An enhanced services platform (ESP) receives a first call from a caller using a particular public telephone number for the particular subscriber. The ESP identifies the particular public telephone number for the particular subscriber. The ESP accesses a database storing a public telephone number and a private packet-based address for subscribers to retrieve a private packet-based address of the particular subscriber on the basis of the particular public telephone number. An introductory message is provided to the caller and prompts the caller to leave a message. The ESP accesses the particular subscriber based on the particular subscriber private packet-based address to establish an audio connection via the communication medium. The subscriber is notified of the first call. If the subscriber answers the call, a communication path is provided between the caller and the subscriber via the communication medium so that the subscriber may hear the caller leave the message but the caller does not hear or know that the particular subscriber is listening. The ESP connects the caller and the subscriber for two-way communication upon the authorization of the subscriber. In another embodiment, both the caller and the subscriber use a packet-based network. In another aspect, the ESP records the caller's voice in response to the prompt, and plays the recording to the subscriber if the subscriber answers the call. In yet another aspect of the invention, the ESP provides a method for anonymously connecting an accesser to a subscriber using a packet-based network.

### Summary of the Invention

Embodiments of the present invention provide a communication method and a communication apparatus to achieve the objective of saving communication resources.

In order to achieve the above objective, the following technical solutions are employed by the embodiments of the present invention.

A communication method comprises receiving, by a femto cellular interconnection device (Hub Femto), a first call request of a first fixed line telephone terminal sent by a private branch exchange, the first call request carrying an identifier of a first mobile terminal; determining, by the Hub Femto, that the first fixed line telephone terminal and the first mobile terminal are located within coverage of the same local area network; performing, by the Hub Femto, signaling conversion between fixed line telephone network signaling and mobile network signaling for the first call request within the local area network; and sending, by the Hub Femto, the first call request after the signaling conversion to an access point (AP) in a mobile network to which the first mobile terminal belongs, so that the AP initiates a call request to the first mobile terminal according to the identifier of the first mobile terminal; a terminal information list is stored in the Hub Femto, or a terminal information list is stored in a home nodeB management system HMS, and the Hub Femto obtains information of the terminal information list from the HMS;
wherein the terminal information list includes short numbers of mobile terminals, long numbers of mobile terminals, and correspondences between short numbers of mobile terminals and long numbers of mobile terminals, the short numbers of mobile terminals are the identifiers of the mobile terminals used in the local area network, and the long numbers of mobile terminals are the identifiers of the mobile terminals used in a macro network;
the identifier of the first mobile terminal is the short number of the first mobile
terminal; and that
if the first mobile terminal cannot be connected, the Hub Femto converts the identifier of the first mobile terminal into the long number of the first mobile terminal according to the correspondences between short numbers of the mobile terminals and long numbers of the mobile terminals in the terminal information list, and uses the long number of the first mobile terminal to initiate a call request to a mobile core network device of a macro network to which the Hub Femto belongs, or uses the long number of the first mobile terminal to initiate a call request to the private branch exchange, so that the private branch exchange initiates a call for the first mobile terminal to a fixed line telephone core network device to which the private branch exchange belongs.

Corresponding to the aforementioned communication method is a femto cellular interconnection device (Hub Femto), which comprises a first signaling receiving unit, configured to receive a first call request of a first fixed line telephone terminal sent by a private branch exchange, the first call request carrying an identifier of a first mobile terminal; a first signaling determining unit, configured to determine that the first fixed line telephone terminal and the first mobile terminal are located within coverage of the same local area network; a first signaling converting unit, configured to perform signaling conversion between fixed line telephone network signaling and mobile network signaling for the first call request within the local area network; and a first signaling sending unit, configured to send the first call request after the signaling conversion to an access point (AP) in a mobile network to which the first mobile terminal belongs, so that the AP to initiates a call request to the first mobile terminal according to the identifier of the first mobile terminal; a storing unit, configured to store a terminal information list; or an obtaining unit, configured to obtain information of a terminal information list from a home nodeB management system HMS, wherein the terminal information list is stored in the HMS;
wherein the terminal information list includes short numbers of mobile terminals, long numbers of mobile terminals, and correspondences between short numbers of mobile terminals and long numbers of mobile terminals, the short numbers of mobile
terminals are the identifiers of the mobile terminals used in the local area network, and the long numbers of mobile terminals are the identifiers of the mobile terminals used in a macro network;
the Hub Femto further comprising a first long-short number converting unit, configured to convert the identifier of the first mobile terminal into the long number of the first mobile terminal according to the correspondences between short numbers of mobile terminals and long numbers of mobile terminals in the terminal information list in the case that the identifier of the first mobile terminal is the short number of the first mobile terminal, and that the first mobile terminal cannot be connected; and
a first initiation requesting unit, configured to use the long number of the first mobile terminal to initiate a call request to a mobile core network device of a macro network to which the Hub Femto belongs.

Corresponding to the aforementioned communication method is a femto cellular interconnection device (Hub Femto), which comprises a first signaling receiving unit, configured to receive a first call request of a first fixed line telephone terminal sent by a private branch exchange, the first call request carrying an identifier of a first mobile terminal; a first signaling determining unit, configured to determine that the first fixed line telephone terminal and the first mobile terminal are located within coverage of the same local area network; a first signaling converting unit, configured to perform signaling conversion between fixed line telephone network signaling and mobile network signaling for the first call request within the local area network; and a first signaling sending unit, configured to send the first call request after the signaling conversion to an access point (AP) in a mobile network to which the first mobile terminal belongs, so that the AP to initiates a call request to the first mobile terminal according to the identifier of the first mobile terminal; a storing unit, configured to store a terminal information list; or an obtaining unit, configured to obtain information of a terminal information list from a home nodeB management system HMS, wherein the terminal information list is stored in the HMS;
wherein the terminal information list includes short numbers of mobile terminals,
long numbers of mobile terminals, and correspondences between short numbers of mobile terminals and long numbers of mobile terminals, the short numbers of mobile terminals are the identifiers of the mobile terminals used in the local area network, and the long numbers of mobile terminals are the identifiers of the mobile terminals used in a macro network;
the Hub Femto further comprising a second long-short number converting unit, configured to convert the identifier of the first mobile terminal into the long number of the first mobile terminal according to the correspondences between short numbers of mobile terminals and long numbers of mobile terminals in the terminal information list in the case that the identifier of the first mobile terminal is the short number of the first mobile terminal, and that the first mobile terminal cannot be connected;
a second initiation requesting unit, configured to use the long number of the first mobile terminal to initiate a call request to the private branch exchange, so that the private branch exchange initiates a call for the first mobile terminal to a fixed line telephone core network device to which the private branch exchange belongs.

According to the communication method and apparatus provided by the embodiments of the present invention, when the fixed line telephone terminal and the mobile terminal are located within coverage of the same local area network, the Hub Femto performs signaling conversion between fixed line telephone network signaling and mobile network signaling within the local area network, thus making it possible for the fixed line telephone terminal to initiate a call request to the mobile terminal within the local area network. As compared with the prior art, the technical solution provided by the present invention realizes communication between the fixed line telephone terminal and the mobile terminal within the same local area network without any macro network, whereby the tortuous call path is effectively reduced, thus saving communication resources.

### Brief description of the drawings

In order to make clearer the explanations of the technical solutions in the embodiments of the present invention or the prior art, accompanying drawings needed in the description of the embodiments or the prior art are briefly described below. Apparently, the accompanying drawings as described below are merely directed to some embodiments of the present invention, and it would require no creative effort for persons ordinarily skilled in the art to deduce other accompanying drawings in accordance with these accompanying drawings.
Fig. 1 is a view illustrating the network structure of a communication system in the prior art;
Fig. 2 is a view illustrating the network structure of a communication system provided by an embodiment of the present invention;
Fig. 3 is a schematic diagram illustrating a communication method whereby a fixed line telephone terminal calls a mobile terminal provided by an embodiment of the present invention;
Fig. 4 is a specific flowchart illustrating the communication method shown in Fig. 3;
Fig. 5 is a schematic diagram illustrating a method whereby an AP obtains software version/parameter from Hub Femto provided by an embodiment of the present invention;
Fig. 6 is a flowchart illustrating a communication method provided by an embodiment of the present invention in the case the mobile terminal cannot be connected;
Fig. 7 is a schematic diagram illustrating a communication method whereby a mobile terminal calls a fixed line telephone terminal provided by an embodiment of the present invention;
Fig. 8 is a specific flowchart illustrating the communication method shown in Fig. 7;
Fig. 9 is a flowchart illustrating a method whereby Hub Femto detects user terminal statuses in real time provided by an embodiment of the present invention;
Fig. 10 is a schematic diagram illustrating another communication method provided by an embodiment of the present invention with respect to the case in which a mobile terminal gradually moves out of coverage of a local area network during the process of communication;
Fig. 11 is a block diagram illustrating the structure of a communication apparatus provided by an embodiment of the present invention;
Fig. 12 is a block diagram illustrating the structure of another communication apparatus provided by an embodiment of the present invention; and
Fig. 13 is a block diagram illustrating the structure of yet another communication apparatus provided by an embodiment of the present invention.

### Detailed description of the embodiments

The technical solutions in the embodiments of the present invention will be clearly and completely described below with reference to the accompanying drawings. Apparently, the embodiments as described below are merely partial, rather than the entire, embodiments of the present invention. All other embodiments obtainable by persons ordinarily skilled in the art without creative effort based on the embodiments of the present invention shall all fall within the protection scope of the present invention.

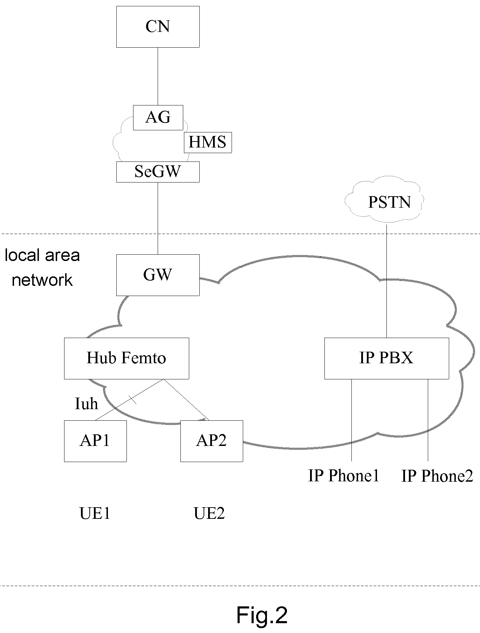

Referring to Fig. 2, in order to achieve the objective of saving communication resources during the process of communication within coverage of a local area network, the present invention provides a communication system that comprises a femto cellular interconnection device (Hub Femto) configured to interconnect between a fixed line telephone network and a mobile network within the same local area network (LAN). The Hub Femto can specifically be configured to realize communication between a fixed line telephone terminal and a mobile terminal in the same local area network (LAN) in the case that the two are located within coverage of the same local area network.

The local area network (LAN) in the embodiments of the present invention is a communication network created to realize internal communication. For instance, the local area network (LAN) may be a communication network created within a local geographical range (such as a school, a factory, an enterprise, a government, etc.); however, if a large-scale enterprise has multiple communication sites, and internal communication services are still required among the multiple communication sites of the enterprise, the local area network (LAN) is a large enterprise network that subsumes the multiple communication sites to realize internal communication of the enterprise.

Referring to Fig. 2, in the local area network (LAN), the private branch exchange (PBX) in the fixed line telephone network may be an IP PBX, and access points of the mobile network are AP1, AP2. Suppose that Hub Femto is an independent entity, then Hub Femto and AP1, AP2 performs signaling/data transmission through an luh interface, and Hub Femto connects AP1, AP2 with IP PBX within the same local area network (LAN), whereby is realized signaling/data transmission between AP1, AP2 and IP PBX, and it is finally made possible to realize communication between the mobile terminals UE1, UE2 and the fixed line telephone terminals IP Phone1, IP Phone2 within the local area network (LAN).

Of course, Hub Femto may also be a functional module of the mobile network access points AP1, AP2, and the functional module enables signaling/data transmission between IP PBX of the fixed line telephone network and AP1, AP2 of the mobile network within the same local area network (LAN); in other words, the functional module realizes interconnection between the fixed line telephone network and the mobile network within the same local area network (LAN), and finally realizes communication between UE1, UE2 and IP Phone1, IP Phone2 within the same local area network (LAN).

An embodiment of the present invention provides a communication system that comprises a Hub Femto, and the Hub Femto enables interconnection between a fixed line telephone network and a mobile network within the same local area network (LAN), whereby is realized communication between mobile user terminals UE1, UE2 and fixed line telephone terminals IP Phone1, IP Phone2 in the same local area network only within the local area network without having to go through any macro network. As compared with the prior art, the solution provided by the present invention can effectively reduce the tortuous call path and hence save communication resources.

The fixed line telephone terminal in the embodiments of the present invention is exemplified by an IP Phone, but it is not restricted to the IP Phone in the process of actual implementation; moreover, the fixed line telephone terminal is not restricted to a terminal fixed at a certain position, as terminals movable for a short distance can also be included in the category of the fixed line telephone terminal. The mobile terminal may be a mobile telephone or any other mobile device. The private branch exchange may be an IP PBX, but it is not restricted to the IP PBX in the process of actual implementation.

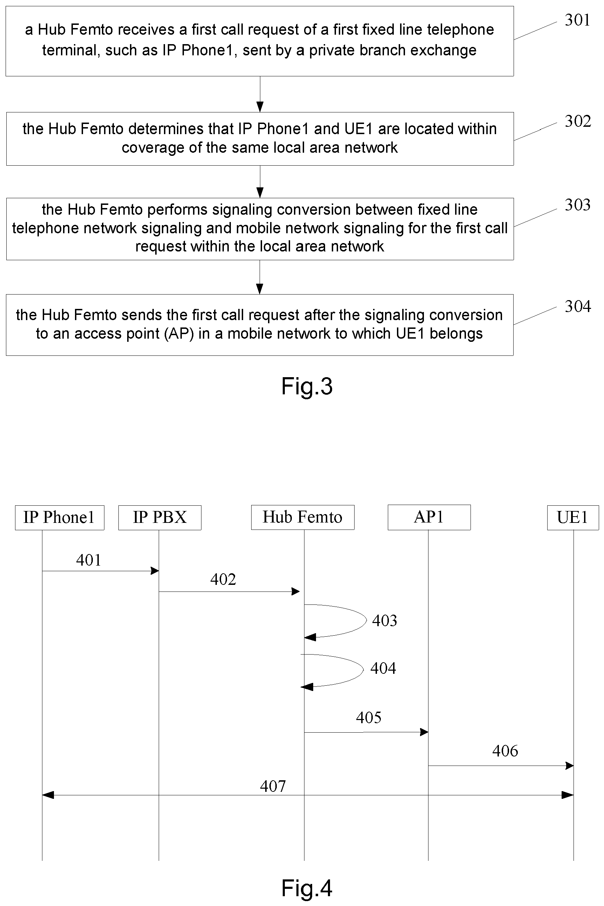

In order to realize communication between a fixed line telephone terminal and a mobile terminal within the same local area network, this embodiment provides below a communication method. As shown in Fig. 3, the method comprises the following steps.

301 - a Hub Femto receives a first call request of a first fixed line telephone terminal, such as IP Phone1, sent by a private branch exchange, the first call request carrying an identifier, such as a UE1 identifier, of a first mobile terminal.

The private branch exchange may be an IP PBX, the UE1 identifier may be a number of UE1; preferably, the number of UE1 may be a short number.

302 - the Hub Femto determines that IP Phone1 and UE1 are located within coverage of the same local area network.

For instance, the local area network is an enterprise network of an enterprise, and IP Phone1 is usually located in the enterprise network, then this step may mainly determine that UE1 is within coverage of the enterprise network, so IP Phone1 and UE1 are within coverage of the same local area network.

303 - the Hub Femto performs signaling conversion between fixed line telephone network signaling and mobile network signaling for the first call request within the local area network.

For a fixed line telephone network whose private branch exchange is IP PBX, the fixed line telephone network signaling may be IP signaling. In addition, the mobile network signaling may be 24.008 signaling.

This step is so specifically configured that the Hub Femto converts IP signaling to 24.008 signaling for the call request of the IP Phone in the local area network.

304 - the Hub Femto sends the first call request after the signaling conversion to an access point (AP) in a mobile network to which UE1 belongs, so that the AP initiates a call request to UE1 according to the identifier of UE1. The access point (AP) in the mobile network to which UE1 belongs may be an access point (AP1) in a mobile network which provides service to UE1.

This step is so specifically configured that the Hub Femto sends a call request that uses 24.008 signaling to the access point (AP1) in a mobile network to which UE1 belongs, so that AP1 can initiate a call request to UE1 according to the number of UE1 carried in the call request.

According to the communication method provided by the embodiment of the present invention, by interconnecting the fixed line telephone network and the mobile network of the same local area network, the fixed line telephone terminal can initiate a call request to the mobile terminal in the local area network without going through any macro network, whereby the tortuous call path is effectively reduced, thus saving communication resources.

Reference is made to Fig. 4 below to describe in greater detail the process in which IP Phone1 calls UE1 with respect to the aforementioned communication system.

401 - IP Phone1 sends a call request to the IP PBX, the call request carrying a number of the called mobile terminal UE1, which number is preferably a short number of UE1.

402 - the IP PBX further sends the call request to the Hub Femto.

403 - the Hub Femto determines to learn that UE1 and IP Phone1 are located within coverage of the same local area network.

404 - IP signaling is converted to 24.008 signaling for the call request.

405 - the Hub Femto initiates a call request based on 24.008 signaling to the access point AP1 in a mobile network to which UE1 belongs.

406 - AP1 calls UE1 according to the number of UE1 carried in the call request, and UE1 rings.

Of course, UE1 may be bound to other user terminals, and it is possible to set ringing rules of UE1 and the user terminals to which UE1 is bound, on the Hub Femto; when UE1 is called, UE1 and the other user terminals to which UE1 is bound can sequentially or simultaneously ring according to the preset ringing rules. The other user terminals may be mobile terminals or fixed line telephone terminals in the local area network.

Further, after UE1 is connected, step 407 is carried out.

407 - the Hub Femto receives user plane data sent by the IP PBX, converts a media format of the user plane data, and sends to AP1 the user plane data with the media format converted.

Of course, since the communication process is a process of data interaction, so this step is alternatively so configured that the Hub Femto receives user plane data sent by AP1, converts a media format of the user plane data, and sends to the IP PBX the user plane data with the media format converted.

Step 407 realizes interaction of user plane data of the communication between IP Phone1 and UE1, and this step may of course further include signaling interaction that is necessitated in the communication process between the two.

Conversion of the media format may be the mutual conversion between voice recording format AMR and voice playing format; of course, in case of a terminal that supports video communication, conversion of the media format may as well be the mutual conversion between image recording format and video format.

In order to enable the user to conveniently and quickly initiate a call to the called terminal, the call request in the embodiments of the present invention carries short numbers of the called terminal. Since terminals, mobile terminals in particular, have their long numbers, there may be a terminal information list to record terminal short numbers, terminal long numbers, and correspondences between terminal short numbers and terminal long numbers. The terminal information list may be stored in the Hub Femto. Of course, the terminal information list may also be stored in a home nodeB management system HMS, and the Hub Femto may obtain information of the terminal information list from the HMS.

Generally speaking, there are two modes for dialing internal numbers within coverage of the same local area network (inside an enterprise, for instance): one is to directly dial a short number; the other is to dial the prefix of a special number + a short number.

Firstly, for the first mode of directly dialing a short number, the terminal information list may include mobile terminal short numbers, long numbers MSISDNs (Mobile Subscriber International Integrated Service Digital Network numbers), and correspondences between terminal short numbers and long numbers, and may further include IMSIs (International Mobile Subscriber Identification numbers) - see Table 1 for details. For example, in Table 1, the IMSI and the MSISDN that correspond to the short number 90001 are IMS1 1 and the long number 13912345678, respectively.

**Table 1**

| IMSI Codes | Short Numbers | MSIDSN Codes (Long Numbers) |
|---|---|---|
| IMSI 1 | 90001 | 13912345678 |
| IMSI 2 | 90002 | 13912345679 |
| IMSI 3 | 90003 | 13912345670 |

Secondly, for the second mode of dialing the prefix of a special number + a short number, prefixes of special numbers may be separately listed in the Hub Femto - see Table 2.

**Table 2**

| Prefix of a Special Number | Notes |
|---|---|
| 01 | for example, the prefix of the number of Shenzhen Branch Company |

See Table 1 for correspondences between the short numbers and the long numbers.

For example, once 01+90001 is dialed, it is possible to initiate a call to the terminal, whose short number is 90001, of the Shenzhen Branch Company; of course, prefixes of special numbers may also be used to realize other functions.

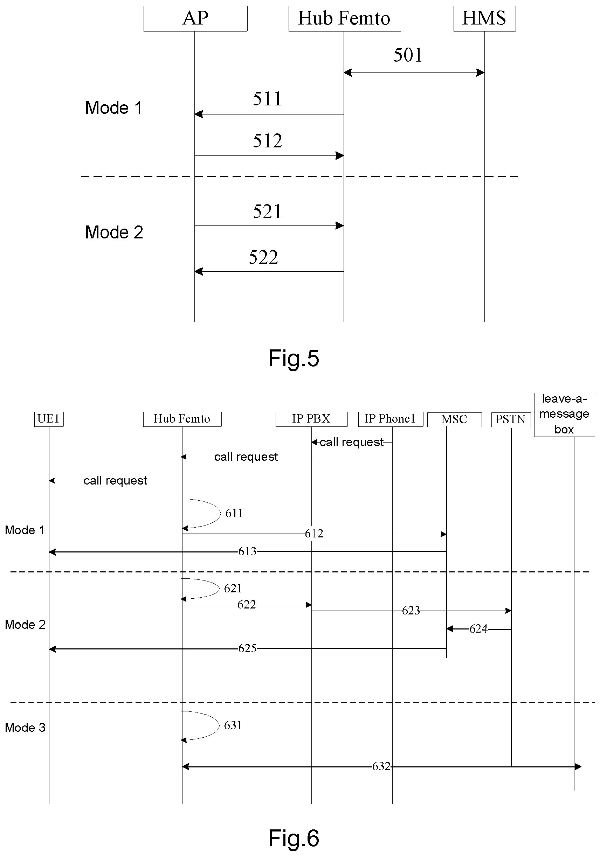

In the prior art, even the software versions/parameters used by such APs as AP1, AP2 etc. within the coverage of the same local area network are directly downloaded from the HMS (Home NodeB Management System) of the macro network. Since the Hub Femto is added to the local area network in this embodiment, the APs within coverage of the local area network may download software versions/parameters by the mode described below. If a terminal information list is stored in the HMS, information of the terminal information list may be downloaded and obtained by the Hub Femto from the HMS as parts of the parameters according to requirement. See Fig. 5 for the specific process in which an AP downloads a software version/parameter.

501 - the Hub Femto requires and obtains a software version/parameter from the HMS.

There are the following two modes whereby the AP obtains a software version/parameter from the Hub Femto. Firstly, the following two steps are required for mode 1.

511 - the Hub Femto notifies the AP (such as AP1 or AP2) within coverage of the local area network that there is a software version/parameter in the Hub Femto obtained from step 501.

512 - the AP obtains the notification sent by the Hub Femto, and downloads the software version/parameter from the Hub Femto.

Moreover, the following two steps are required for mode 2.

521 - the AP sends a request for downloading the software version/parameter to the Hub Femto.

522 - after receiving the request from the AP in step 521, the Hub Femto distributes the software version/parameter to the AP.

It is possible, by using the Hub Femto, for the AP within coverage of the local area network to download the software version/parameter through the modes described above, and this reduces the load of the HMS on the one hand, and reduces the occupation of transmission bandwidths in the macro network on the other hand.

The following embodiment provides the calling flow in the case UE1 cannot be connected.

Considering the circumstance in which IP Phone1 calls UE1 but UE1 may not be connected, this embodiment is further consummated with respect to the circumstance.

When it is because UE1 is temporarily not within coverage of the local area network that UE1 is not connected, a call request may be further initiated to UE1 in the macro network through the following two modes.

### Mode 1:

The Hub Femto converts the short number of UE1 to the long number of UE1 according to the correspondences between terminal short numbers and terminal long numbers in the terminal information list, and uses the long number to send a call request to a mobile core network device, such as an MSC, of the macro network to which the Hub Femto belongs.

See steps 611-613 in Fig. 6 for the specific process.

611 - the Hub Femto converts the short number of UE1 to the long number of UE1.

612 - the Hub Femto uses the long number of UE1 to send a call request to the MSC.

613 - the MSC sends the call request to UE1, and completes the call to UE1 in the macro network.

After UE1 is connected, the communication link is realized, generally exemplarily, as IP Phone1 <->IP PBX <->Hub Femto <-> MSC<->RAN<->UE1.

The MSC is exemplarily a mobile core network device, and the RAN is exemplarily a mobile access network device. Of course, the mobile core network device and the mobile access network device may be realized in combination during the process of implementation.

### Mode 2:

The Hub Femto converts the short number of UE1 to the long number of UE1 according to the correspondences between terminal short numbers and terminal long numbers in the terminal information list, and uses the long number to send a call request to the private branch exchange IP PBX, so that the IP PBX to initiates a call for UE1 to the fixed line telephone core network to which it belongs.

See steps 621-625 in Fig. 6 for the specific process.

621 - the Hub Femto converts the short number of UE1 to the long number of UE1, the long number carrying an identifier of the IP PBX.

622 - the Hub Femto uses the long number of UE1 carrying the identifier of the IP PBX to send a call request to the IP PBX.

623 - the IP PBX sends the call request to the fixed line telephone core network device, such as a PSTN.

624 - the PSTN sends the call request to the mobile core network device, such as an MSC.

625 - the MSC sends the call request to UE1 via the mobile access network device, such as an RAN, by which time the call for UE1 is completed in the macro network.

After UE1 is connected, the communication link is realized, generally, as IP Phone1 <->Hub Femto<->IP PBX<->PSTN <-> MSC<-> RAN<->UE1.

Moreover, under the circumstance in which UE1 cannot be connected, it is also possible to perform the service of leaving a message to the calling IP Phone1 through mode 3. Of course, mode 3 is also applicable to the circumstance in which UE1 is idle and standby but does not answer the call.

See step 631 or step 632 in Fig. 6 for the specific process.

631 - the Hub Femto performs voice recording service to IP Phone1.

Alternatively, step 632 is carried out.

632 - the Hub Femto triggers a leaving-a-message box of UE1, whereupon IP Phone1 can leave a message through the leaving-a-message box of UE1.

This embodiment provides a communication method for the circumstance in which the fixed line telephone terminal calls the mobile terminal but the mobile terminal cannot be connected, to initiating a further call request to the mobile terminal in the macro network or by leaving a message to perform a calling record.

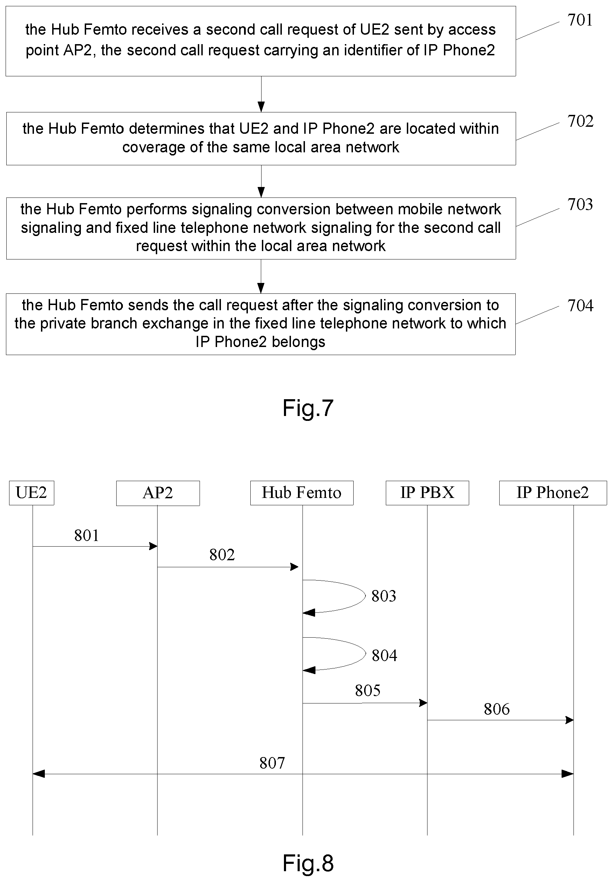

Moreover, with respect to the circumstance in which the mobile terminal calls the fixed line telephone terminal, as shown in Fig. 7, the communication method provided by the embodiment of the present invention further comprises the following steps.

Detailed explanation is made below with an example in which a second mobile terminal, such as UE2, sends a call request to a second fixed line telephone terminal, such as IP Phone2.

701 - the Hub Femto receives a second call request of UE2 sent by access point AP2, the second call request carrying an identifier of IP Phone2.

This step may be so specifically configured that the Hub Femto receives a call request of the mobile terminal UE2 sent by access point AP2, the call request carrying an identifier of IP Phone2, namely the number of IP Phone2, which number is preferably the short number of IP Phone2.

702 - the Hub Femto determines that UE2 and IP Phone2 are located within coverage of the same local area network.

703 - the Hub Femto performs signaling conversion between mobile network signaling and fixed line telephone network signaling for the second call request within the local area network.

This step is so specifically configured that the Hub Femto converts 24.008 signaling to IP signaling for the call request of UE2 in the local area network.

704 - the Hub Femto sends the call request after the signaling conversion to the private branch exchange in the fixed line telephone network to which IP Phone2 belongs, so that the private branch exchange initiates a call request to IP Phone2 according to the identifier of IP Phone2.

This step is so specifically configured that the Hub Femto sends a call request after signaling conversion to the IP PBX, so that IP PBX can initiate a call request to IP Phone2 according to the number of IP Phone2 in the call request.

Steps 701-704 enable the mobile terminal to send a call request in the local area network to the fixed line telephone terminal within coverage of the same local area network without going through any macro network, whereby achieving the purpose of reducing the tortuous call path and saving communication resources. Steps 701-704 are supplementary to steps 301-304, and consummate the technical solution of the present invention.

The aforementioned communication method will be described in greater detail below.

Refer to Fig. 8 on the basis of the aforementioned communication system and in the supposition that the mobile terminal UE2 in the local area network LAN calls the fixed line telephone terminal IP Phone2. The communication method provided by this embodiment specifically comprises the following steps.

801 - UE2 sends a call request to AP2, the call request carrying the short number of the called terminal IP Phone2.

802 -AP2 sends the call request to the Hub Femto.

803 -the Hub Femto determines to learn that IP Phone2 and UE2 are located within coverage of the same local area network.

804 - 24.008 signaling is converted to IP signaling for the call request.

805 - the Hub Femto initiates a call request based on IP signaling to the network node IP PBX of the fixed line telephone network to which IP Phone2 belongs.

806 - the IP PBX calls IP Phone2 according to the short number of IP Phone2 carried in the call request, and IP Phone2 rings.

Of course, IP Phone2 may be bound to other user terminals, and it is possible to set ringing rules of IP Phone2 and the other user terminals to which IP Phone2 is bound, on the Hub Femto or the IP PBX; when UE2 calls IP Phone2, IP Phone2 and the other user terminals to which IP Phone2 is bound can sequentially or simultaneously ring according to the preset ringing rules. The other user terminals may be mobile terminals or fixed line telephone terminals in the local area network.

After IP Phone2 is connected, step 807 is carried out.

807 - the Hub Femto receives user plane data sent by the IP PBX, converts a media format of the user plane data, and sends to AP2 the user plane data with the media format converted.

Of course, since the communication process is a process of data interaction, so this step is alternatively so configured that the Hub Femto receives user plane data sent by AP2, converts a media format of the user plane data, and sends to the IP PBX the user plane data with the media format converted.

Step 807 realizes interaction of user plane data of the communication between IP Phone2 and UE2.

Based on the foregoing introduction to the terminal information list, the process of determining that the mobile terminal and the fixed line telephone terminal are located within coverage of the same local area network in steps 403 and 803 is described in detail.

The terminal information list in the Hub Femto can be updated in real time, and the terminal information list can merely record relevant information of terminals within coverage of the same local area network. The relevant information includes terminal short numbers, terminal long numbers, and correspondences between terminal short numbers and terminal long numbers. When a terminal moves out of coverage of the local area network, the relevant information of the terminal that moves out of coverage of the local area network can be removed from the terminal information list.

Under such circumstance, step 403 comprises: the Hub Femto determines whether the number of the first mobile terminal UE1 is in the terminal information list, if yes, determines that UE1 and IP Phone1 are located within coverage of the same local area network, and, if not, determines that UE1 and IP Phone1 are not located within coverage of the same local area network.

Step 803 comprises: Hub Femto determines whether the number of the second mobile terminal UE2 is in the terminal information list, if yes, determines that UE2 and IP Phone2 are located within coverage of the same local area network, and, if not, determines that UE2 and IP Phone2 are not located within coverage of the same local area network.

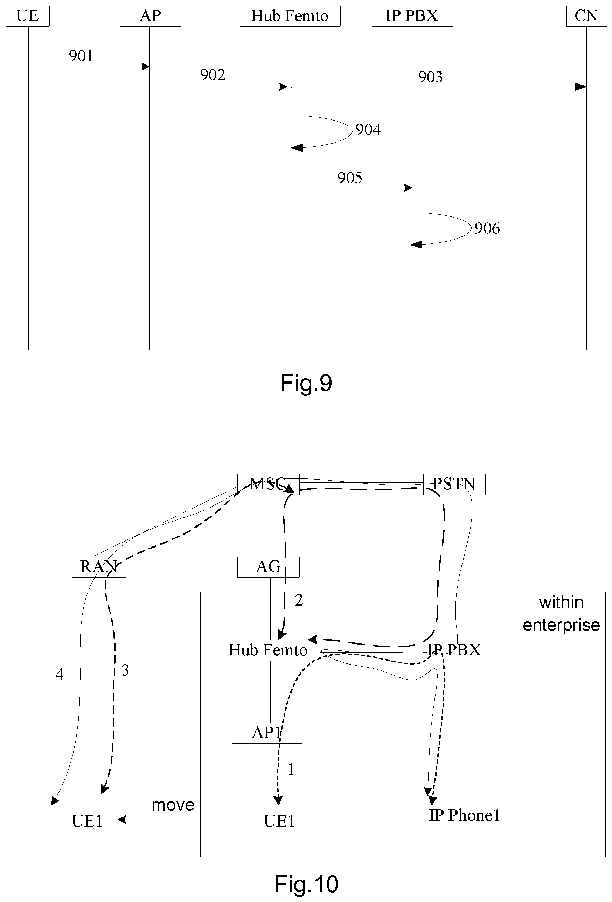

Further, the terminal information list created above can further include terminal statuses, especially mobile terminal statuses, and the mobile terminal statuses can also be updated in real time. Under such circumstance, even if a terminal moves out of coverage of the local area network, it is still unnecessary to remove the relevant information of the terminal from the terminal information list, as it suffices to update the terminal status as an offline status. Referring to Fig. 9, the specific process of updating the mobile terminal status comprises the following steps.

901 - the mobile terminal UE enters within coverage of its access point AP, and first initiates residing information, which may be location area update/routing area update (LAU/RAU), etc.

902 - the AP sends the residing information to the Hub Femto.

903 - the Hub Femto synchronously sends the residing information to the mobile core network CN.

904 - the Hub Femto parses the residing information LAU/RAU to obtain location area identifier/routing area identifier (LAI/RAI) of the UE, according to which Table 1 can be updated, and records the access point AP of the UE and the status of the UE. See Table 3.

**Table 3**

| UE | IMSI Codes | Short Numbers | MSIDSN Codes | Femto | Statuses |
|---|---|---|---|---|---|
| UE1 | IMSI 1 | 90001 | 13912345678 | AP1 | offline |
| UE2 | IMSI 2 | 90002 | 13912345679 | AP2 | idle and standby |
| UE3 | IMSI 3 | 90003 | 13912345670 | AP2 | session in progress |

When UE1 moves out of the local area network, its status is correspondingly recorded as offline in the Hub Femto; when the user terminal UE enters into the local area network, it may be further determined whether the UE is in session, so as to more precisely obtain the status of the UE - for instance, UE2 is in the idle and standby status, and UE3 is in the status of session in progress.

Moreover, if the IP PBX is so capacitated, status updates shown in Table 3 can also be recorded, which process comprises the following steps.

905 - the Hub Femto converts 24.008 signaling to IP signaling, and sends status update information to the IP PBX.

906 - the IP PBX updates terminal statuses as stored.

With respect to the aforementioned terminal information list that includes terminal statuses, the process for steps 403 and 803 to determine that the mobile terminal and the fixed line telephone terminal are located within coverage of the same local area network can also be carried out by the following mode.

Step 403 comprises: the Hub Femto determines whether the status of the mobile terminal UE1 is the offline status, if yes, determines that UE1 and IP Phone1 are not located within coverage of the same local area network, and, if not, determines that UE1 and IP Phone1 are located within coverage of the same local area network.

Step 803 comprises: the Hub Femto determines whether the status of the mobile terminal UE2 is the offline status, if yes, determines that UE2 and IP Phone2 are not located within coverage of the same local area network, and, if not, determines that UE2 and IP Phone2 are located within coverage of the same local area network.

Moreover, the determination that UE1 cannot be connected in the embodiment illustrated by Fig. 6 is carried out by the Hub Femto according to the terminal statuses in the terminal information list - if the status of UE1 is the offline status, the Hub Femto then determines that UE1 cannot be connected.

The communication method provided by the embodiments of the present invention can be applied to such systems as LTE-AP (LTE stands for Long Term Evolution; AP stands for Access Point), CDMA (Code Division Multiple Access), GSM-AP (GSM stands for Global System for Mobile Communications), and Wimax-AP (Wimax stands for Worldwide Interoperability for Microwave Access). The solution may also be applied in the scenario where Femto is merged with IMS (IP Multimedia Subsystem).

The solution provided by this embodiment makes it possible for the mobile terminal and the fixed line telephone terminal to communicate with each other within the local area network without going through any macro network by the Hub Femto that merges the AP system with the IP PBX system, whereby the tortuous call path is effectively reduced, thus saving communication resources. Moreover, since the Hub Femto is capable of converting long and short numbers, the fixed line telephone terminal can dial the short number of the mobile terminal in the local area network to realize communication between the two, thus making the communication between users more convenient.

The present invention provides another embodiment with respect to the circumstance in which the mobile terminal gradually moves out of coverage of the local area network during the process of communication between the mobile terminal and the fixed line telephone terminal, and provides the following solution.

Under general circumstances, it is possible to preset a threshold for signal fading of the mobile terminal; if signaling fading of the mobile terminal is lower than or equal to the threshold during the process of communication, i.e. if signal fading of the mobile terminal satisfies a preset condition during the process of communication, the Hub Femto determines that the mobile terminal is about to move out of coverage of the local area network, in which case, in order not to affect the communication between the mobile terminal and the fixed line telephone terminal, the following solution is provided.

The Hub Femto sends a call request for the Hub Femto to a private branch exchange, such as an IP PBX, so that the IP PBX creates a call loop including the private branch exchange, such as the IP PBX, a fixed line telephone core network device to which the IP PBX belongs, such as a PSTN, a mobile core network device of a macro network to which the Hub Femto belongs, such as an MSC, an access point gateway AG (Access Gateway), and the Hub Femto. The call loop is configured to create a communication link including the UE, an access network device of the macro network to which the Hub Femto belongs, such as an RAN, a core network device of the macro network to which the Hub Femto belongs, such as an MSC, a fixed line telephone core network device to which the private branch exchange belongs, such as a PSTN, the private branch exchange, such as the IP PBX, the Hub Femto, and the IP Phone.

A concrete example is provided below with reference to Fig. 10 to describe in detail the circumstance in which UE1 moves out of coverage of the local area network during the process in which the mobile terminal UE1 and the fixed line telephone terminal IP Phone1 communicate with each other using communication link 1 that includes IP Phone1, the IP PBX, the Hub Femto, AP1, and UE1.

Under such circumstance, in order that the communication between the two is not interrupted, the Hub Femto may have a number itself, and the Hub Femto calls itself. For instance, the number of the Hub Femto itself is 123456, and the Hub Femto dials its own number 123456. In order to make it easy for the IP PBX to identify the number, it is possible to dial a prefix before the number of the Hub Femto, such as 17977. Thus, the called number sent by the Hub Femto to the IP PBX is 17977123456. The IP PBX identifies the prefix number. Because the IP PBX knows from the prefix number that the number should be forwarded to the PSTN, the IP PBX removes the prefix of the number, and sends 123456 to the PSTN. The PSTN routes the number to the Hub Femto to create loop 2 between Hub Femto<->IP PBX<->PSTN<->MSC<->AG<->Hub Femto. The Hub Femto bridges link 1 with link 3, and UE1 and IP Phone1 create communication link 4 of UE1<->RAN<->MSC<->PSTN<-> IP PBX<->Hub Femto<->IP PBX<->IP Phone1, so that communication between UE1 and IP Phone1 is not interrupted.

In this embodiment, by creating the call loop under the circumstance in which the mobile terminal moves out of the local area network, the communication link is switched to the macro network, so that communication between the mobile terminal and the fixed line telephone terminal is not interrupted.

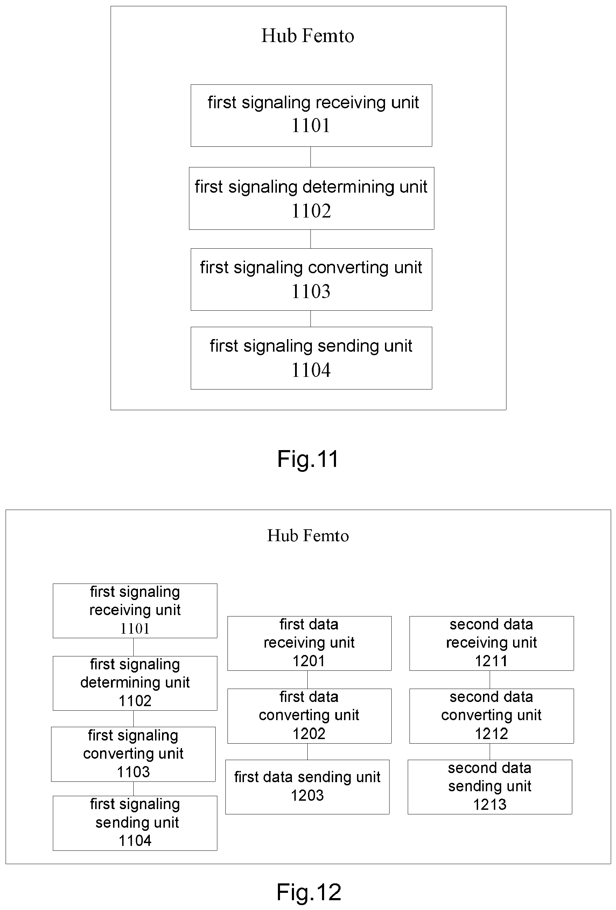

The present invention further provides a femto cellular interconnection device (Hub Femto) that corresponds to the aforementioned communication method. The Hub Femto is the same as the Hub Femto in the communication system as shown in Fig. 2, and is configured to interconnect a fixed line telephone network and a mobile network in the same local area network LAN. The Hub Femto is specifically configured to realize communication between a fixed line telephone terminal and a mobile terminal under the circumstance in which the two are located within coverage of the same local area network LAN. Specifically, as shown in Fig. 11, the Hub Femto comprises the following units with respect to the circumstance in which the fixed line telephone terminal calls the mobile terminal.

A first signaling receiving unit 1101, configured to receive a first call request of a first fixed line telephone terminal, such as IP Phone1, sent by a private branch exchange, such as an IP PBX, the first call request carrying an identifier of a first mobile terminal, such as UE1.

The identifier of UE1 may be the number of UE1, and the number of UE1 is preferably a short number.

A first signaling determining unit 1102, configured to determine that IP Phone1 and UE1 are located within coverage of the same local area network.

A first signaling converting unit 1103, configured to perform signaling conversion between fixed line telephone network signaling and mobile network signaling for the first call request within the local area network.

For a fixed line telephone network whose private branch exchange is IP PBX, the fixed line telephone network signaling may be IP signaling. In addition, the mobile network signaling may be 24.008 signaling. Under such circumstance, the first signaling converting unit 1103 is configured to convert IP signaling to 24.008 signaling for the call request of the IP Phone in the local area network.

A first signaling sending unit 1104, configured to send the first call request after the signaling conversion to an access point AP1 in a mobile network to which UE1 belongs, so that AP1 initiates a call request to UE1 according to the identifier of UE1.

According to the Hub Femto provided by the embodiment of the present invention, by interconnecting the fixed line telephone network and the mobile network of the same local area network, the fixed line telephone terminal can initiate a call request to the mobile terminal in the local area network without going through any macro network, whereby the tortuous call path is effectively reduced, thus saving communication resources.

Moreover, after UE1 is connected, in order to realize transmission of user plane data between IP Phone1 and UE1, the Hub Femto further comprises the following units, as shown in Fig. 12.

A first data receiving unit 1201, configured to receive user plane data sent by the IP PBX.

A first data converting unit 1202, configured to convert a media format of the user plane data received by the first data receiving unit 1201.

A first data sending unit 1203, configured to send to the AP the user plane data with the media format converted.

The access point AP here may be AP1.

The aforementioned three units are directed to realizing data transmission from IP Phone1 to UE1. Of course, since the communication process is a process of data interaction, and UE1 usually also sends data to IP Phone1, so the Hub Femto may further comprise the following units.

A second data receiving unit 1211, configured to receive user plane data sent by the AP.

A second data converting unit 1212, configured to convert a media format of the user plane data received by the second data receiving unit 1211.

A second data sending unit 1213, configured to send to the IP PBX the user plane data with the media format converted.

Moreover, in order to enable the user to conveniently and quickly initiate a call to the called terminal, the call request in the embodiments of the present invention carries short numbers of the called terminal. Since terminals, mobile terminals in particular, have their long numbers, there may be a terminal information list to record terminal short numbers, terminal long numbers, and correspondences between terminal short numbers and terminal long numbers. Under such circumstance, the Hub Femto may further comprise a storing unit, configured to store a terminal information list. Alternatively, the terminal information list may also be stored in a home nodeB management system HMS, in which case the Hub Femto may further comprise an obtaining unit, configured to obtain information of the terminal information list from the home nodeB management system (HMS).

Preferably, the terminal information list may further update in real time the various terminal statuses, and the Hub Femto can then determine whether a terminal can be connected according to the terminal status, in which case the Hub Femto further comprises a non-connection determining unit, configured to determine that UE1 cannot be connected according to the terminal statuses in the terminal information list, if the status of UE1 is an offline status.

Under the circumstance in which it is determined that UE1 cannot be connected, the Hub Femto converts the identifier of UE1 to the long number of UE1 according to the correspondences between terminal short numbers and terminal long numbers in the terminal information list, and uses the long number to initiate a call for UE1 via the macro network. Two solutions are hereby provided.

### Solution 1:

The Hub Femto further comprises a first long-short number converting unit, configured to convert the identifier of UE1 into a long number of UE1 according to the correspondences between terminal short numbers and terminal long numbers in the terminal information list in the case that the identifier of UE1 is a short number of UE1, and that UE1 cannot be connected; and a first initiation requesting unit , configured to use the long number of the UE1 to initiate a call request to a mobile core network device, such as an MSC, of a macro network to which the Hub Femto belongs.

After UE1 is connected, a communication link, such as IP Phone1<->IP PBX <->Hub Femto <-> MSC<->RAN<->UE1, can be realized.

### Solution 2:

The Hub Femto further comprises a second long-short number converting unit, configured to convert UE1 into a long number of UE1 according to the correspondences between terminal short numbers and terminal long numbers in the terminal information list in the case that the identifier of UE1 is a short number of UE1, and that UE1 cannot be connected; and a second initiation requesting unit, configured to use the long number of UE1 to initiate a call request to the IP PBX, so that the IP PBX initiates a call for UE1 to a fixed line telephone core network device PSTN to which the IP PBX belongs.

After UE1 is connected, a communication link, such as IP Phone1<->Hub Femto<->IP PBX<->PSTN <-> MSC<-> RAN<->UE1, can be realized.

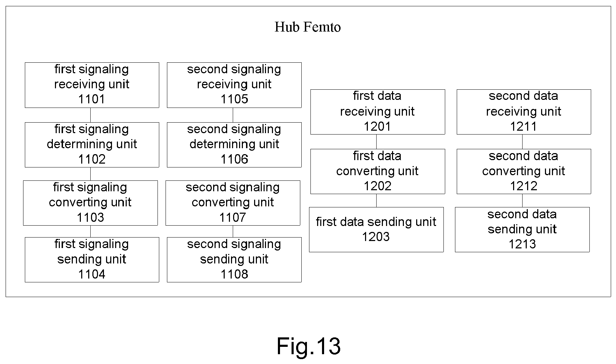

Further, as shown in Fig. 13, considering the circumstance in which the mobile terminal calls the fixed line telephone terminal, the Hub Femto further comprises the following units.

A second signaling receiving unit 1105, configured to receive a second call request of UE2 sent by access point AP2, the second call request carrying an identifier of IP Phone2.

Preferably, the identifier of IP Phone2 may be a short number of IP Phone2.

A second signaling determining unit 1106, configured to determine that UE2 and IP Phone2 are located within coverage of the same local area network.

A second signaling converting unit 1107, configured to perform signaling conversion between mobile network signaling and fixed line telephone network signaling for the second call request within the local area network.

The second signaling converting unit 1107 can be configured to convert 24.008 signaling to IP signaling for the call request of UE2 in the local area network.

A second signaling sending unit 1108, configured to send the second call request after the signaling conversion to the IP PBX, so that the IP PBX initiates a call request to IP Phone2 according to the identifier of IP Phone2.

After IP Phone2 is connected, in order to realize user plane transmission between UE2 and IP Phone2 during the process of communication, the three units 1201-1203 are likewise required to send data from IP Phone2 to UE2, and the three units 1211-1213 are required to send data from UE2 to IP Phone2, in which the AP may be AP2.

Detailed explanation is made below with respect to the first signaling determining unit 1102 and the second signaling determining unit 1106.

The terminal information list in the Hub Femto can be updated in real time, and the terminal information list can merely record relevant information of terminals within coverage of the same local area network. The relevant information includes terminal short numbers, terminal long numbers, and correspondences between terminal short numbers and terminal long numbers. When a terminal moves out of coverage of the local area network, the relevant information of the terminal that moves out of coverage of the local area network can be removed from the terminal information list.

Under such circumstance, the first signaling determining unit 1102 is configured to determine whether the identifier of UE1 is in the terminal information list, and, if yes, determining that IP Phone1 and UE1 are located within coverage of the same local area network.

The second signaling determining unit 1106 is configured to determine whether UE2 is in the terminal information list, and, if yes, determining that UE2 and IP Phone2 are located within coverage of the same local area network.

Alternatively, the terminal information list further includes terminal statuses, in which case, even if a terminal moves out of coverage of the local area network, it is still unnecessary to remove the relevant information of the terminal from the terminal information list, as it suffices to update the terminal status as an offline status.

Under such circumstance, the first signaling determining unit 1102 is configured to query the terminal information list about the status of UE1 according to the identifier of UE1, and determining that IP Phone1 and UE1 are located within coverage of the same local area network if the status of UE1 is not an offline status.

The second signaling determining unit 1106 is configured to query the terminal information list about the status of UE2 according to the identifier of UE2, and determining that IP Phone2 and UE2 are located within coverage of the same local area network if the status of UE2 is not an offline status.

The Hub Femto provided by this embodiment makes it possible for the mobile terminal and the fixed line telephone terminal to communicate with each other within the local area network without going through any macro network by merging the AP system with the IP PBX system, whereby the tortuous call path is effectively reduced, thus saving communication resources. Moreover, since the Hub Femto is capable of converting long and short numbers, the fixed line telephone terminal can dial the short number of the mobile terminal in the local area network to realize communication between the two, thus making the communication between users more convenient.

This embodiment provides the following solution with respect to the circumstance in which the mobile terminal gradually moves out of coverage of the local area network during the process of communication between the mobile terminal and the fixed line telephone terminal.

Under general circumstances, it is possible to preset a threshold for signal fading of the mobile terminal; if signaling fading of the mobile terminal is lower than or equal to the threshold during the process of communication, i.e. if signal fading of the mobile terminal satisfies a preset condition during the process of communication, the Hub Femto determines that the mobile terminal is about to move out of coverage of the local area network, in which case, in order not to affect the communication between the mobile terminal and the fixed line telephone terminal, the following solution is provided.

With respect to the circumstance in which the first fixed line telephone terminal, such as IP Phone1, calls the first mobile terminal UE1, and UE1 moves out of coverage of the local area network during the process of communication between the two, the Hub Femto further comprises a first analog calling unit, configured to send a call request for the Hub Femto to the IP PBX, if signal fading of UE1 satisfies a preset condition during the process of communication, so that the IP PBX creates a call loop including the IP PBX, a fixed line telephone core network device to which the IP PBX belongs, such as a PSTN, a mobile core network device of a macro network to which the Hub Femto belongs, such as an MSC, an access point gateway AG, and the Hub Femto, wherein the call loop is configured to create a communication link including UE1, an access network device RAN of the macro network to which the Hub Femto belongs, the MSC, the PSTN, the Hub Femto, the IP PBX and IP Phone1.

Alternatively, with respect to the circumstance in which the second mobile terminal UE2 calls the second fixed line telephone terminal IP Phone2, and UE2 moves out of coverage of the local area network during the process of communication between the two, the Hub Femto further comprises a second analog calling unit, configured to send a call request for the Hub Femto to the IP PBX, if signal fading of UE2 satisfies a preset condition during the process of communication, so that the IP PBX creates a call loop including the IP PBX, the PSTN, the MSC, the AG, and the Hub Femto, wherein the call loop is configured to create a communication link including UE2, the RAN, the MSC, the PSTN, the Hub Femto, the IP PBX and IP Phone2.

In this embodiment, by creating the call loop under the circumstance in which the mobile terminal moves out of the local area network, the communication link is switched to the macro network, so that communication between the mobile terminal and the fixed line telephone terminal is not interrupted.

The aforementioned method embodiments can be used as supplements to the device embodiments, while no repetition will be made in this context.

It is clear to persons skilled in the art from the foregoing description of the embodiments that the present invention can be realized by means of software plus the necessary general hardware, and can be realized of course by hardware alone, though the former is preferred under most circumstances. Based on such understanding, the technical solution of the present invention, or, in other words, the part of the invention that makes contribution to the prior art, can be embodied in the form of a software product, which is stored in such a readable storage medium as a floppy disk, a hard disk or an optical disk of a computer, and which includes multiple instructions enabling a computer device (which may be a personal computer, a server, or a network device) to execute the methods according to the various embodiments of the present invention.

The above is merely directed to specific embodiments of the present invention, and the protection scope of the present invention is not restricted thereto. Any modification or substitution easily conceivable to persons skilled in the art within the technical scope disclosed in the present invention shall all be covered within the protection scope of the present invention. Therefore, the protection scope of the present invention shall be based on the protection scope of the claims herein attached.

## Claims

1. A communication method, comprising:
receiving, by a femto cellular interconnection device, Hub Femto, a first call request of a first fixed line telephone terminal sent by a private branch exchange (301), the first call request carrying an identifier of a first mobile terminal;
determining, by the Hub Femto, that the first fixed line telephone terminal and the first mobile terminal are located within coverage of the same local area network (302);
performing, by the Hub Femto, signaling conversion between fixed line telephone network signaling and mobile network signaling for the first call request within the local area network (303); and
sending, by the Hub Femto, the first call request after the signaling conversion to an access point, AP, in a mobile network to which the first mobile terminal belongs (304), so that the AP initiates a call request to the first mobile terminal according to the identifier of the first mobile terminal;
**characterized in that**
a terminal information list is stored in the Hub Femto, or a terminal information list is stored in a home nodeB management system, HMS, and the Hub Femto obtains information of the terminal information list from the HMS;
wherein the terminal information list includes short numbers of mobile terminals, long numbers of mobile terminals, and correspondences between short numbers of mobile terminals and long numbers of mobile terminals, the short numbers of mobile terminals are the identifiers of the mobile terminals used in the local area network, and the long numbers of mobile terminals are the identifiers of the mobile terminals used in a macro network;
the identifier of the first mobile terminal is the short number of the first mobile terminal; and that
if the first mobile terminal cannot be connected, the Hub Femto converts the identifier of the first mobile terminal into the long number of the first mobile terminal according to the correspondences between short numbers of the mobile terminals and long numbers of the mobile terminals in the terminal information list, and uses the long number of the first mobile terminal to initiate a call request to a mobile core network device of a macro network to which the Hub Femto belongs, or uses the long number of the first mobile terminal to initiate a call request to the private branch exchange, so that the private branch exchange initiates a call for the first mobile terminal to a fixed line telephone core network device to which the private branch exchange belongs.

2. The communication method according to claim 1, **characterized in** further comprising:
receiving, by the Hub Femto, a second call request of a second mobile terminal sent by the AP, the second call request carrying an identifier of a second fixed line telephone terminal (701);
determining, by the Hub Femto, that the second mobile terminal and the second fixed line telephone terminal are located within coverage of the same local area network (702);
performing, by the Hub Femto, signaling conversion between mobile network signaling and fixed line telephone network signaling for the second call request within the local area network (703); and
sending, by the Hub Femto, the second call request after the signaling conversion to the private branch exchange, so that the private branch exchange initiates a call request to the second fixed line telephone terminal according to the identifier of the second fixed line telephone terminal (704).

3. The communication method according to claim 1, **characterized in that**:
the terminal information list further includes terminal statuses; and that
if that the first mobile terminal cannot be connected is determined by the Hub Femto according to the terminal statuses in the terminal information list, and if the status of the first mobile terminal is an offline status, the Hub Femto determines that the first mobile terminal cannot be connected.

4. The communication method according to claim 1, **characterized in that**:
the process of determining, by the Hub Femto, that the first fixed line telephone terminal and the first mobile terminal are located within coverage of the same local area network comprises:
determining, by the Hub Femto, whether the identifier of the first mobile terminal is in the terminal information list, and, if yes, determining that the first fixed line telephone terminal and the first mobile terminal are located within coverage of the same local area network; and that
the process of determining, by the Hub Femto, that the second mobile terminal and the second fixed line telephone terminal are located within coverage of the same local area network comprises:
determining, by the Hub Femto, whether the identifier of the second mobile terminal is in the terminal information list, and, if yes, determining that the second fixed line telephone terminal and the second mobile terminal are located within coverage of the same local area network.

5. The communication method according to claim 1, **characterized in that**:
the terminal information list further includes terminal statuses; that
the process of determining, by the Hub Femto, that the first fixed line telephone terminal and the first mobile terminal are located within coverage of the same local area network comprises:
querying, by the Hub Femto, the terminal information list about the status of the first mobile terminal according to the identifier of the first mobile terminal, and determining that the first fixed line telephone terminal and the first mobile terminal are located within coverage of the same local area network if the status of the first mobile terminal is not an offline status; and that
the process of determining, by the Hub Femto, that the second mobile terminal and the second fixed line telephone terminal are located within coverage of the same local area network comprises:
querying, by the Hub Femto, the terminal information list about the status of the second mobile terminal according to the identifier of the second mobile terminal, and determining that the second fixed line telephone terminal and the second mobile terminal are located within coverage of the same local area network if the status of the second mobile terminal is not an offline status.

6. The communication method according to claim 2, **characterized in** further comprising:
receiving, by the Hub Femto, user plane data sent by the private branch exchange, converting a media format of the user plane data, and sending to the AP the user plane data with the media format converted; or
receiving, by the Hub Femto, user plane data sent by the AP, converting a media format of the user plane data , and sending to the private branch exchange the user plane data with the media format converted.

7. The communication method according to claim 2, **characterized in** further comprising:
sending, by the Hub Femto, a call request for the Hub Femto to the private branch exchange, if signal fading of the first mobile terminal satisfies a preset condition during the process of communication, so that the private branch exchange creates a call loop including the private branch exchange, a fixed line telephone core network device to which the private branch exchange belongs, a mobile core network device of a macro network to which the Hub Femto belongs to, an access point gateway, and the Hub Femto, wherein the call loop is configured to create a communication link including the first mobile terminal, an access network device of the macro network to which the Hub Femto belongs, a core network device of the macro network to which the Hub Femto belongs, a fixed line telephone core network device to which the private branch exchange belongs, the Hub Femto, the private branch exchange, and the first fixed line telephone terminal; or
sending, by the Hub Femto, a call request for the Hub Femto to the private branch exchange, if signal fading of the second mobile terminal satisfies a preset condition during the process of communication, so that the private branch exchange creates a call loop including the private branch exchange, a fixed line telephone core network device to which the private branch exchange belongs, a mobile core network device of a macro network to which the Hub Femto belongs, an access point gateway, and the Hub Femto, wherein the call loop is configured to create a communication link including the second mobile terminal, an access network device of the macro network to which the Hub Femto belongs, a core network device of the macro network to which the Hub Femto belongs, a fixed line telephone core network device to which the private branch exchange belongs, the Hub Femto, the private branch exchange, and the second fixed line telephone terminal.

8. A femto cellular interconnection device, Hub Femto, comprising:
a first signaling receiving unit (1101), configured to receive a first call request of a first fixed line telephone terminal sent by a private branch exchange, the first call request carrying an identifier of a first mobile terminal;
a first signaling determining unit (1102), configured to determine that the first fixed line telephone terminal and the first mobile terminal are located within coverage of the same local area network;
a first signaling converting unit (1103), configured to perform signaling conversion between fixed line telephone network signaling and mobile network signaling for the first call request within the local area network; and
a first signaling sending unit (1104), configured to send the first call request after the signaling conversion to an access point, AP, in a mobile network to which the first mobile terminal belongs, so that the AP initiates a call request to the first mobile terminal according to the identifier of the first mobile terminal;
**characterized by**
a storing unit, configured to store a terminal information list; or
an obtaining unit, configured to obtain information of a terminal information list from a home nodeB management system HMS, wherein the terminal information list is stored in the HMS;
wherein the terminal information list includes short numbers of mobile terminals, long numbers of mobile terminals, and correspondences between short numbers of mobile terminals and long numbers of mobile terminals, the short numbers of mobile terminals are the identifiers of the mobile terminals used in the local area network, and the long numbers of mobile terminals are the identifiers of the mobile terminals used in a macro network;
the Hub Femto further comprising a first long-short number converting unit, configured to convert the identifier of the first mobile terminal into the long number of the first mobile terminal according to the correspondences between short numbers of mobile terminals and long numbers of mobile terminals in the terminal information list in the case that the identifier of the first mobile terminal is the short number of the first mobile terminal, and that the first mobile terminal cannot be connected; and
a first initiation requesting unit, configured to use the long number of the first mobile terminal to initiate a call request to a mobile core network device of a macro network to which the Hub Femto belongs.

9. A femto cellular interconnection device, Hub Femto, comprising:
a first signaling receiving unit (1101), configured to receive a first call request of a first fixed line telephone terminal sent by a private branch exchange, the first call request carrying an identifier of a first mobile terminal;
a first signaling determining unit (1102), configured to determine that the first fixed line telephone terminal and the first mobile terminal are located within coverage of the same local area network;
a first signaling converting unit (1103), configured to perform signaling conversion between fixed line telephone network signaling and mobile network signaling for the first call request within the local area network; and
a first signaling sending unit (1104), configured to send the first call request after the signaling conversion to an access point, AP, in a mobile network to which the first mobile terminal belongs, so that the AP initiates a call request to the first mobile terminal according to the identifier of the first mobile terminal;
**characterized by**
a storing unit, configured to store a terminal information list; or
an obtaining unit, configured to obtain information of a terminal information list from a home nodeB management system HMS, wherein the terminal information list is stored in the HMS;
wherein the terminal information list includes short numbers of mobile terminals, long numbers of mobile terminals, and correspondences between short numbers of mobile terminals and long numbers of mobile terminals, the short numbers of mobile terminals are the identifiers of the mobile terminals used in the local area network, and the long numbers of mobile terminals are the identifiers of the mobile terminals used in a macro network;
the Hub Femto further comprising a second long-short number converting unit, configured to convert the identifier of the first mobile terminal into the long number of the first mobile terminal according to the correspondences between short numbers of mobile terminals and long numbers of mobile terminals in the terminal information list in the case that the identifier of the first mobile terminal is the short number of the first mobile terminal, and that the first mobile terminal cannot be connected; and
a second initiation requesting unit, configured to use the long number of the first mobile terminal to initiate a call request to the private branch exchange, so that the private branch exchange initiates a call for the first mobile terminal to a fixed line telephone core network device to which the private branch exchange belongs.

10. The Hub Femto according to claim 8 or 9, **characterized in** further comprising:
a second signaling receiving unit (1105), configured to receive a second call request of a second mobile terminal sent by the AP, the second call request carrying an identifier of a second fixed line telephone terminal;
a second signaling determining unit (1106), configured to determine that the second mobile terminal and the second fixed line telephone terminal are located within coverage of the same local area network;
a second signaling converting unit (1107), configured to perform signaling conversion between mobile network signaling and fixed line telephone network signaling for the second call request within the local area network; and
a second signaling sending unit (1108), configured to send the second call request after the signaling conversion to the private branch exchange, so that the private branch exchange initiates a call request to the second fixed line telephone terminal according to the identifier of the second fixed line telephone terminal.

11. The Hub Femto according to claim 8 or 9, **characterized in that**:
the terminal information list further includes terminal statuses; and that the Hub Femto further comprises:
a non-connection determining unit, configured to determine that the first mobile terminal cannot be connected according to the terminal statuses in the terminal information list, if the status of the first mobile terminal is an offline status.

12. The Hub Femto according to claim 10, **characterized in that**:
the first signaling determining unit (1102) is configured to determine whether the identifier of the first mobile terminal is in the terminal information list, and, if yes, determining that the first fixed line telephone terminal and the first mobile terminal are located within coverage of the same local area network; and that
the second signaling determining unit (1106) is configured to determine whether the identifier of the second mobile terminal is in the terminal information list, and, if yes, determining that the second fixed line telephone terminal and the second mobile terminal are located within coverage of the same local area network.

13. The Hub Femto according to claim 8 or 9, **characterized in that**:
the terminal information list further includes terminal statuses; that
the first signaling determining unit (1102) is configured to query the terminal information list about the status of the first mobile terminal according to the identifier of the first mobile terminal, and determining that the first fixed line telephone terminal and the first mobile terminal are located within coverage of the same local area network if the status of the first mobile terminal is not an offline status; and that
the second signaling determining unit (1106) is configured to query the terminal information list about the status of the second mobile terminal according to the identifier of the second mobile terminal, and determining that the second fixed line telephone terminal and the second mobile terminal are located within coverage of the same local area network if the status of the second mobile terminal is not an offline status.

14. The Hub Femto according to claim 10, **characterized in that**:
the Hub Femto further comprises:
a first data receiving unit (1201), configured to receive user plane data sent by the private branch exchange;
a first data converting unit (1202), configured to convert a media format of the user plane data received by the first data receiving unit; and
a first data sending unit (1203), configured to send to the AP the user plane data with the media format converted;
or that the Hub Femto further comprises:
a second data receiving unit (1211), configured to receive user plane data sent by the AP;
a second data converting unit (1212), configured to convert a media format of the user plane data received by the second data receiving unit; and
a second data sending unit (1213), configured to send to the private branch exchange the user plane data with the media format converted.

15. The Hub Femto according to claim 10, **characterized in that**:
the Hub Femto further comprises:
a first analog calling unit, configured to send a call request for the Hub Femto to the private branch exchange, if signal fading of the first mobile terminal satisfies a preset condition during the process of communication, so that the private branch exchange creates a call loop including the private branch exchange, a fixed line telephone core network device to which the private branch exchange belongs, a mobile core network device of a macro network to which the Hub Femto belongs to, an access point gateway, and the Hub Femto, wherein the call loop is configured to create a communication link including the first mobile terminal, an access network device of the macro network to which the Hub Femto belongs, a core network device of the macro network to which the Hub Femto belongs, a fixed line telephone core network device to which the private branch exchange belongs, the Hub Femto, the private branch exchange, and the first fixed line telephone terminal;
or that the Hub Femto further comprises:
a second analog calling unit, configured to send a call request for the Hub Femto to the private branch exchange, if signal fading of the second mobile terminal satisfies a preset condition during the process of communication, so that the private branch exchange creates a call loop including the private branch exchange, a fixed line telephone core network device to which the private branch exchange belongs, a mobile core network device of a macro network to which the Hub Femto belongs, an access point gateway, and the Hub Femto, wherein the call loop is configured to create a communication link including the second mobile terminal, an access network device of the macro network to which the Hub Femto belongs, a core network device of the macro network to which the Hub Femto belongs, a fixed line telephone core network device to which the private branch exchange belongs, the Hub Femto, the private branch exchange, and the second fixed line telephone terminal.

## Patentansprüche

1. Kommunikationsverfahren, umfassend:
Empfangen durch eine Femto-Zellularfunkverbindungsvorrichtung, Hub Femto, einer durch eine Nebenstellenanlage (301) gesendeten ersten Rufanforderung eines ersten Festleitungs-Telefonendgeräts, wobei die erste Rufanforderung eine Kennung eines ersten mobilen Endgeräts führt;
Bestimmen durch das Hub Femto, dass sich das erste Festleitungs-Telefonendgerät und das erste mobile Endgerät im Versorgungsbereich des gleichen Ortsnetzes (302) befinden;
Durchführen durch das Hub Femto von Signalisierungsumwandlung zwischen Festleitungs-Telefonnetzsignalisierung und Mobilfunknetzsignalisierung für die erste Rufanforderung in dem Ortsnetz (303); und
Senden durch das Hub Femto der ersten Rufanforderung nach der Signalisierungsumwandlung zu einem Zugangspunkt, AP (Access Point) in einem Mobilfunknetz, zu dem das erste mobile Endgerät gehört (304), so dass der AP eine Rufanforderung zum ersten mobilen Endgerät gemäß der Kennung des ersten mobilen Endgeräts einleitet;
**dadurch gekennzeichnet, dass**
eine Endgeräteinformationsliste im Hub Femto gespeichert ist oder eine Endgeräteinformationsliste in einem Verwaltungssystem des Heimatknotens B (Home NodeB) HMS gespeichert ist und das Hub Femto Informationen der Endgeräteinformationsliste von dem HMS erhält;
wobei die Endgeräteinformationsliste kurze Nummern von mobilen Endgeräten, lange Nummern von mobilen Endgeräten und Entsprechungen zwischen kurzen Nummern von mobilen Endgeräten und langen Nummern von mobilen Endgeräten umfasst, die kurzen Nummern von mobilen Endgeräten die Kennungen der in dem Ortsnetz benutzten mobilen Endgeräte sind und die langen Nummern der mobilen Endgeräte die Kennungen der in einem Großnetz benutzten mobilen Endgeräte sind; die Kennung des ersten mobilen Endgeräts die kurze Nummer des ersten mobilen Endgeräts ist; und dass,
wenn das erste mobile Endgerät nicht verbunden werden kann, das Hub Femto die Kennung des ersten mobilen Endgeräts in die lange Nummer des ersten mobilen Endgeräts gemäß den Entsprechungen zwischen kurzen Nummern der mobilen Endgeräte und langen Nummern der mobilen Endgeräte in der Endgeräteinformationsliste umwandelt und die lange Nummer des ersten mobilen Endgeräts zum Einleiten einer Rufanforderung an eine Mobilfunk-Kernnetzvorrichtung eines Großnetzes benutzt, zu dem das Hub Femto gehört, oder die lange Nummer des ersten mobilen Endgeräts zum Einleiten einer Rufanforderung an die Nebenstellenanlage benutzt, so dass die Nebenstellenanlage einen Ruf für das erste mobile Endgerät zu einer Festleitungs-Telefonkernnetzvorrichtung einleitet, zu der die Nebenstellenanlage gehört.

2. Kommunikationsverfahren nach Anspruch 1, **dadurch gekennzeichnet, dass** es weiterhin umfasst:
Empfangen durch das Hub Femto einer durch den AP gesendeten zweiten Rufanforderung eines zweiten mobilen Endgeräts, wobei die zweite Rufanforderung eine Kennung eines zweiten Festleitungs-Telefonendgeräts (701) führt;
Bestimmen durch das Hub Femto, dass sich das zweite mobile Endgerät und das zweite Festleitungs-Telefonendgerät im Versorgungsbereich des gleichen Ortsnetzes (702) befinden;
Durchführen durch das Hub Femto von Signalisierungsumwandlung zwischen Mobilfunknetzsignalisierung und Festleitungs-Telefonnetzsignalisierung für die zweite Rufanforderung in dem Ortsnetz (703); und
Senden durch das Hub Femto der zweiten Rufanforderung nach der Signalisierungsumwandlung zu der Nebenstellenanlage, so dass die Nebenstellenanlage eine Rufanforderung zum zweiten Festleitungs-Telefonendgerät gemäß der Kennung des zweiten Festleitungs-Telefonendgeräts (704) einleitet.

3. Kommunikationsverfahren nach Anspruch 1, **dadurch gekennzeichnet, dass** die Endgeräteinformationsliste weiterhin Endgerätezustände umfasst; und dass, wenn durch das Hub Femto gemäß den Endgerätezuständen in der Endgeräteinformationsliste bestimmt wird, dass das erste mobile Endgerät nicht verbunden werden kann, und wenn der Zustand des ersten mobilen Endgeräts ein Zustand nicht angeschlossen ist, das Hub Femto bestimmt, dass das erste mobile Endgerät nicht verbunden werden kann.

4. Kommunikationsverfahren nach Anspruch 1, **dadurch gekennzeichnet, dass**:
das Verfahren des Bestimmens durch das Hub Femto, dass sich das erste Festleitungs-Telefonendgerät und das erste mobile Endgerät im Versorgungsbereich des gleichen Ortsnetzes befinden, umfasst:
Bestimmen durch das Hub Femto, ob die Kennung des ersten mobilen Endgeräts in der Endgeräteinformationsliste ist und, wenn ja, Bestimmen, dass sich das erste Festleitungs-Telefonendgerät und das erste mobile Endgerät im Versorgungsbereich des gleichen Ortsnetzes befinden; und dass
das Verfahren des Bestimmens durch das Hub Femto, dass sich das zweite mobile Endgerät und das zweite Festleitungs-Telefonendgerät im Versorgungsbereich des gleichen Ortsnetzes befinden, umfasst:
Bestimmen durch das Hub Femto, ob die Kennung des zweiten mobilen Endgeräts in der Endgeräteinformationsliste ist und, wenn ja, Bestimmen, dass sich das zweite Festleitungs-Telefonendgerät und das zweite mobile Endgerät im Versorgungsbereich des gleichen Ortsnetzes befinden.

5. Kommunikationsverfahren nach Anspruch 1, **dadurch gekennzeichnet, dass**:
die Endgeräteinformationsliste weiterhin Endgerätezustände umfasst; dass das Verfahren des Bestimmens durch das Hub Femto, dass sich das erste Festleitungs-Telefonendgerät und das erste mobile Endgerät im Versorgungsbereich des gleichen Ortsnetzes befinden, umfasst:
Abfragen durch das Hub Femto der Endgeräteinformationsliste über den Zustand des ersten mobilen Endgeräts gemäß der Kennung des ersten mobilen Endgeräts, und Bestimmen, dass sich das erste Festleitungs-Telefonendgerät und das erste mobile Endgerät im Versorgungsbereich des gleichen Ortsnetzes befinden, wenn der Zustand des ersten mobilen Endgeräts nicht ein Zustand nicht angeschlossen ist; und dass
das Verfahren des Bestimmens durch das Hub Femto, dass sich das zweite mobile Endgerät und das zweite Festleitungs-Telefonendgerät im Versorgungsbereich des gleichen Ortsnetzes befinden, umfasst:
Abfragen durch das Hub Femto der Endgeräteinformationsliste über den Zustand des zweiten mobilen Endgeräts gemäß der Kennung des zweiten mobilen Endgeräts, und Bestimmen, dass sich das zweite Festleitungs-Telefonendgerät und das zweite mobile Endgerät im Versorgungsbereich des gleichen Ortsnetzes befinden, wenn der Zustand des zweiten mobilen Endgeräts nicht ein Zustand nicht angeschlossen ist.

6. Kommunikationsverfahren nach Anspruch 2, weiterhin **gekennzeichnet durch** Umfassen:
Empfangen **durch** das Hub Femto von Daten auf Benutzerebene gesendet **durch** die Nebenstellenanlage, Umwandeln eines Medienformats der Daten auf Benutzerebene und Senden zum AP der Daten auf Benutzerebene mit dem umgewandelten Medienformat; oder
Empfangen **durch** das Hub Femto von **durch** das AP gesendeten Daten auf Benutzerebene, Umwandeln eines Medienformats der Daten auf Benutzerebene und Senden der Daten auf Benutzerebene mit dem umgewandelten Medienformat zu der Nebenstellenanlage.

7. Kommunikationsverfahren nach Anspruch 2, **gekennzeichnet durch** weiterhin Umfassen:
Senden **durch** das Hub Femto einer Rufanforderung für das Hub Femto zu der Nebenstellenanlage, wenn Signalschwund des ersten mobilen Endgeräts eine voreingestellte Bedingung während des Verfahrens von Kommunikation erfüllt, so dass die Nebenstellenanlage eine Verbindungsschleife einschließlich der Nebenstellenanlage, einer Festleitungs-Telefonkernnetzvorrichtung, zu der die Nebenstellenanlage gehört, einer Mobilfunkkernnetzvorrichtung eines Großnetzes, zu der das Hub Femto gehört, eines Zugangspunktgateways und des Hub Femto erstellt, wobei die Verbindungsschleife eingerichtet ist zum Erstellen einer Kommunikationsverbindung einschließlich des ersten Mobilfunkendgeräts, einer Zugangsnetzvorrichtung des Großnetzes, zu der das Hub Femto gehört, einer Kernnetzvorrichtung des Großnetzes, zu der das Hub Femto gehört, einer Festleitungs-Telefonkernnetzvorrichtung, zu der die Nebenstellenanlage gehört, des Hub Femto, der Nebenstellenanlage und des ersten Festleitungs-Telefonendgeräts; oder
Senden **durch** das Hub Femto einer Rufanforderung für das Hub Femto zu der Nebenstellenanlage, wenn Signalschwund des zweiten mobilen Endgeräts eine voreingestellte Bedingung während des Verfahrens von Kommunikation erfüllt, so dass die Nebenstellenanlage eine Verbindungsschleife einschließlich der Nebenstellenanlage, einer Festleitungs-Telefonkernnetzvorrichtung, zu der die Nebenstellenanlage gehört, einer Mobilfunkkernnetzvorrichtung eines Großnetzes, zu der das Hub Femto gehört, eines Zugangspunktgateways und des Hub Femto erstellt, wobei die Verbindungsschleife eingerichtet ist zum Erstellen einer Kommunikationsverbindung einschließlich des zweiten Mobilfunkendgeräts, einer Zugangsnetzvorrichtung des Großnetzes, zu dem das Hub Femto gehört, einer Kernnetzvorrichtung des Großnetzes, zu dem das Hub Femto gehört, einer Festleitungs-Telefonkernnetzvorrichtung, zu der die Nebenstellenanlage gehört, des Hub Femto, der Nebenstellenanlage und des zweiten Festleitungs-Telefonendgeräts.

8. Femto-Zellularfunkverbindungsvorrichtung, Hub Femto, umfassend:
eine erste Signalisierungsempfangseinheit (1101) eingerichtet zum Empfangen einer durch eine Nebenstellenanlage gesendeten ersten Rufanforderung eines ersten Festleitungs-Telefonendgeräts, wobei die erste Rufanforderung eine Kennung eines ersten mobilen Endgeräts führt;
eine erste Signalisierungsbestimmungseinheit (1102) eingerichtet zum Bestimmen, dass das erste Festleitungs-Telefonendgerät und das erste mobile Endgerät sich im Versorgungsbereich des gleichen Ortsnetzes befinden;
eine erste Signalisierungsumwandlungseinheit (1103) eingerichtet zum Durchführen von Signalisierungsumwandlung zwischen Festleitungs-Telefonnetzsignalisierung und Mobilfunknetzsignalisierung für die erste Rufanforderung in dem Ortsnetz; und
eine erste Signalisierungssendeeinheit (1104) eingerichtet zum Senden der ersten Rufanforderung nach der Signalisierungsumwandlung zu einem Zugangspunkt AP in einem Mobilfunknetz, zu dem das erste mobile Endgerät gehört, so dass der AP eine Rufanforderung zum ersten mobilen Endgerät gemäß der Kennung des ersten mobilen Endgeräts einleitet;
**gekennzeichnet durch**
eine Speichereinheit eingerichtet zum Speichern einer Endgeräteinformationsliste; oder
eine Erhaltungseinheit eingerichtet zum Erhalten von Informationen einer Endgeräteinformationsliste von einem Verwaltungssytem des Heimatknotens B (Home NodeB) HMS, wobei die Endgeräteinformationsliste in dem HMS gespeichert ist;
wobei die Endgeräteinformationsliste kurze Nummern von mobilen Endgeräten, lange Nummern von mobilen Endgeräten und Entsprechungen zwischen kurzen Nummern von mobilen Endgeräten und langen Nummern von mobilen Endgeräten umfasst, die kurzen Nummern von mobilen Endgeräten die Kennungen der in dem Ortsnetz benutzten mobilen Endgeräte sind und die langen Nummern von mobilen Endgeräten die Kennungen der in einem Großnetz benutzten mobilen Endgeräte sind;
wobei das Hub Femto weiterhin eine erste lange-kurze Nummernumwandlungseinheit umfasst, eingerichtet zum Umwandeln der Kennung des ersten mobilen Endgeräts in die lange Nummer des ersten mobilen Endgeräts gemäß den Entsprechungen zwischen kurzen Nummern von mobilen Endgeräten und langen Nummern von mobilen Endgeräten in der Endgeräteinformationsliste in dem Fall, dass die Kennung des ersten mobilen Endgeräts die kurze Nummer des ersten mobilen Endgeräts ist und dass das erste mobile Endgerät nicht verbunden werden kann; und
eine erste Einleitungsanforderungseinheit eingerichtet zum Benutzen der langen Nummer des ersten mobilen Endgeräts zum Einleiten einer Rufanforderung an eine Mobilfunkkernnetzvorrichtung eines Großnetzes, zu dem das Hub Femto gehört.

9. Femto-Zellularfunkverbindungsvorrichtung, Hub Femto, umfassend:
eine erste Signalisierungsempfangseinheit (1101) eingerichtet zum Empfangen einer durch eine Nebenstellenanlage gesendeten ersten Rufanforderung eines ersten Festleitungs-Telefonendgeräts, wobei die erste Rufanforderung eine Kennung eines ersten mobilen Endgeräts führt;
eine erste Signalisierungsbestimmungseinheit (1102) eingerichtet zum Bestimmen, dass sich das erste Festleitungs-Telefonendgerät und das erste Mobilfunkendgerät im Versorgungsbereich des gleichen Ortsnetzes befinden,
eine erste Signalisierungsumwandlungseinheit (1103) eingerichtet zum Durchführen von Signalisierungsumwandlung zwischen Festleitungs-Telefonnetzsignalisierung und Mobilfunknetzsignalisierung für die erste Rufanforderung in dem Ortsnetz; und
eine erste Signalisierungssendeeinheit (1104) eingerichtet zum Senden der ersten Rufanforderung nach der Signalisierungsumwandlung zu einem Zugangspunkt AP in einem Mobilfunknetz, zu dem das erste mobile Endgerät gehört, so dass der AP eine Rufanforderung zu dem ersten mobilen Endgerät gemäß der Kennung des ersten mobilen Endgeräts einleitet;
**gekennzeichnet durch**
eine Speichereinheit eingerichtet zum Speichern einer Endgeräteinformationsliste; oder
eine Erhaltungseinheit eingerichtet zum Erhalten von Informationen einer Endgeräteinformationsliste von einem Verwaltungssystem eines Heimatknotens B (Home NodeB) HMS, wobei die Endgeräteinformationsliste im HMS gespeichert ist;
wobei die Endgeräteinformationsliste kurze Nummern von mobilen Endgeräten, lange Nummern von mobilen Endgeräten und Entsprechungen zwischen kurzen Nummern von mobilen Endgeräten und langen Nummern von mobilen Endgeräten umfasst, die kurzen Nummern von mobilen Endgeräten die Kennungen der im Ortsnetz benutzten mobilen Endgeräte sind und die langen Nummern von mobilen Endgeräten die Kennungen von in einem Großnetz benutzten mobilen Endgeräten sind;
wobei das Hub Femto weiterhin eine zweite lange-kurze-Nummernumwandlungseinheit umfasst, eingerichtet zum Umwandeln der Kennung des ersten mobilen Endgeräts in die lange Nummer des ersten mobilen Endgeräts gemäß den Entsprechungen zwischen kurzen Nummern von mobilen Endgeräten und langen Nummern von mobilen Endgeräten in der Endgeräteinformationsliste, im Fall, dass die Kennung des ersten mobilen Endgeräts die kurze Nummer des ersten mobilen Endgeräts ist und dass das mobile Endgerät nicht verbunden werden kann; und
eine zweite Einleitungsanforderungseinheit eingerichtet zum Benutzen der langen Nummer des ersten mobilen Endgeräts zum Einleiten einer Rufanforderung an die Nebenstellenanlage, so dass die Nebenstellenanlage einen Ruf für das erste mobile Endgerät zu einer Festleitungs-Telefonkernnetzvorrichtung einleitet, zu der die Nebenstellenanlage gehört.

10. Hub Femto nach Anspruch 8 oder 9, **gekennzeichnet durch** weiterhin Umfassen:
eine zweite Signalisierungsempfangseinheit (1105) eingerichtet zum Empfangen einer **durch** den AP gesendeten zweiten Rufanforderung eines zweiten mobilen Endgeräts, wobei die zweite Rufanforderung eine Kennung eines zweiten Festleitungs-Telefonendgeräts führt;
eine zweite Signalisierungsbestimmungseinheit (1106) eingerichtet zum Bestimmen, dass sich das zweite mobile Endgerät und das zweite Festleitungs-Telefonendgerät im Versorgungsbereich des gleichen Ortsnetzes befinden;
eine zweite Signalisierungsumwandlungseinheit (1107) eingerichtet zum Durchführen von Signalisierungsumwandlung zwischen Mobilfunknetzsignalisierung und Festleitungstelefonnetzsignalisierung für die zweite Rufanforderung in dem Ortsnetz; und
eine zweite Signalisierungssendeeinheit (1108) eingerichtet zum Senden der zweiten Rufanforderung nach der Signalisierungsumwandlung zu der Nebenstellenanlage, so dass die Nebenstellenanlage eine Rufanforderung zu dem zweiten Festleitungs-Telefonendgerät gemäß der Kennung des zweiten Festleitungs-Telefonendgeräts einleitet.

11. Hub Femto nach Anspruch 8 oder 9, **dadurch gekennzeichnet, dass**:
die Endgeräteinformationsliste weiterhin Endgerätezustände umfasst; und dass das Hub Femto weiterhin umfasst:
eine Nichtverbindungs-Bestimmungseinheit eingerichtet zum Bestimmen, dass das erste mobile Endgerät gemäß den Endgerätezuständen in der Endgeräteinformationsliste nicht verbunden werden kann, wenn der Zustand des ersten mobilen Endgeräts ein Zustand nicht angeschlossen ist.

12. Hub Femto nach Anspruch 10, **dadurch gekennzeichnet, dass**:
die erste Signalisierungsbestimmungseinheit (1102) eingerichtet ist zum Bestimmen, ob die Kennung des ersten mobilen Endgeräts in der Endgeräteinformationsliste ist und, wenn ja, Bestimmen, dass sich das erste Festleitungs-Telefonendgerät und das erste mobile Endgerät im Versorgungsbereich des gleichen Ortsnetzes befinden; und dass
die zweite Signalisierungsbestimmungseinheit (1106) eingerichtet ist zum Bestimmen, ob die Kennung des zweiten mobilen Endgeräts in der Endgeräteinformationsliste ist und, wenn ja, Bestimmen, dass das zweite Festleitungs-Telefonendgerät und das zweite mobile Endgerät sich im Versorgungsbereich des gleichen Ortsnetzes befinden.

13. Hub Femto nach Anspruch 8 oder 9, **dadurch gekennzeichnet, dass**:
die Endgeräteinformationsliste weiterhin Endgerätezustände umfasst; dass die erste Signalisierungsbestimmungseinheit (1102) eingerichtet ist zum Abfragen der Endgeräteinformationsliste über den Zustand des ersten mobilen Endgeräts gemäß der Kennung des ersten mobilen Endgeräts und Bestimmen, dass sich das erste Festleitungs-Telefonendgerät und das erste mobile Endgerät im Versorgungsbereich des gleichen Ortsnetzes befinden, wenn der Zustand des ersten mobilen Endgeräts nicht ein Zustand nicht angeschlossen ist; und, dass
die zweite Signalisierungsbestimmungseinheit (1106) eingerichtet ist zum Abfragen der Endgeräteinformationsliste über den Zustand des zweiten mobilen Endgeräts gemäß der Kennung des zweiten mobilen Endgeräts und Bestimmen, dass sich das zweite Festleitungs-Telefonendgerät und das zweite mobile Endgerät im Versorgungsbereich des gleichen Ortsnetzes befinden, wenn der Zustand des zweiten mobilen Endgeräts nicht ein Zustand nicht angeschlossen ist.

14. Hub Femto nach Anspruch 10, **dadurch gekennzeichnet, dass**:
das Hub Femto weiterhin umfasst:
eine erste Datenempfangseinheit (1201) eingerichtet zum Empfangen von durch die Nebenstellenanlage gesendeten Daten auf Benutzerebene;
eine erste Datenumwandlungseinheit (1202) eingerichtet zum Umwandeln eines Medienformats der durch die erste Datenempfangseinheit empfangenen Daten auf Benutzerebene; und
eine erste Datensendeeinheit (1203) eingerichtet zum Senden zum AP der Daten auf Benutzerebene mit dem umgewandelten Medienformat;
oder dass das Hub-Femto weiterhin umfasst:
eine zweite Datenempfangseinheit (1211) eingerichtet zum Empfangen von durch den AP gesendeten Daten auf Benutzerebene;
eine zweite Datenumwandlungseinheit (1212) eingerichtet zum Umwandeln eines Medienformats der durch die zweite Datenempfangseinheit empfangenen Daten auf Benutzerebene; und
eine zweite Datensendeeinheit (1213) eingerichtet zum Senden zu der Nebenstellenanlage der Daten auf Benutzerebene mit dem umgewandelten Medienformat.

15. Hub Femto nach Anspruch 10, **dadurch gekennzeichnet, dass**:
das Hub Femto weiterhin umfasst:
eine erste Analog-Anrufeinheit eingerichtet zum Senden einer Rufanforderung für das Hub Femto zu der Nebenstellenanlage, wenn Signalschwund des ersten mobilen Endgeräts eine voreingestellte Bedingung während des Verfahrens von Kommunikation erfüllt, so dass die Nebenstellenanlage eine Verbindungsschleife einschließlich der Nebenstellenanlage, einer Festleitungs-Telefonkernnetzvorrichtung, zu der die Nebenstellenanlage gehört, einer Mobilfunkkernnetzvorrichtung eines Großnetzes, zu dem das Hub Femto gehört, eines Zugangspunktgateways und des Hub Femto erstellt, wobei die Verbindungsschleife eingerichtet ist zum Erzeugen einer Kommunikationsverbindung einschließlich des ersten Mobilfunkendgeräts, einer Zugangsnetzvorrichtung des Großnetzes, zu dem das Hub Femto gehört, einer Kernnetzvorrichtung des Großnetzes, zu dem das Hub Femto gehört, einer Festleitungs-Telefonkernnetzvorrichtung, zu der die Nebenstellenanlage gehört, des Hub Femto, der Nebenstellenanlage und des ersten Festleitungs-Telefonendgeräts;
oder dass das Hub Femto weiterhin umfasst:
eine zweite Analog-Anrufeinheit eingerichtet zum Senden einer Rufanforderung für das Hub Femto zu der Nebenstellenanlage, wenn Signalschwund des zweiten mobilen Endgeräts während des Verfahrens von Kommunikation eine voreingestellte Bedingung erfüllt, so dass die Nebenstellenanlage eine Verbindungsschleife einschließlich der Nebenstellenanlage, einer Festleitungs-Telefonkernnetzvorrichtung, zu der die Nebenstellenanlage gehört, einer Mobilfunkkernnetzvorrichtung eines Großnetzes, zu dem das Hub Femto gehört, eines Zugangspunktgateways, und des Hub Femto erstellt, wobei die Verbindungsschleife eingerichtet ist zum Erzeugen einer Kommunikationsverbindung einschließlich des zweiten Mobilfunkendgeräts, einer Zugangsnetzvorrichtung des Großnetzes, zu dem das Hub Femto gehört, einer Kernnetzvorrichtung des Großnetzes zu dem das Hub-Femto gehört, einer Festleitungs-Telefonkernnetzvorrichtung, zu der die Nebenstellenanlage gehört, des Hub Femto, der Nebenstellenanlage, und des zweiten Festleitungs-Telefonendgeräts.

## Revendications

1. Procédé de communication, comprenant les étapes consistant à :
recevoir, par un dispositif d'interconnexion cellulaire femto, dit Hub Femto, une première demande d'appel d'un premier terminal téléphonique de ligne fixe envoyée par un commutateur privé (301), la première demande d'appel contenant un identificateur d'un premier terminal mobile ;
déterminer, par le Hub Femto, que le premier terminal téléphonique de ligne fixe et le premier terminal mobile se trouvent dans la zone de couverture du même réseau local (302) ;
effectuer, par le Hub Femto, une conversion de signalisation entre une signalisation de réseau téléphonique de ligne fixe et une signalisation de réseau mobile pour la première demande d'appel au sein du réseau local (303) ; et
envoyer, par le Hub Femto, suite à la conversion de signalisation, la première demande d'appel à un point d'accès, dit AP, dans un réseau mobile auquel le premier terminal mobile appartient (304), de sorte que l'AP lance une demande d'appel à destination du premier terminal mobile conformément à l'identificateur du premier terminal mobile ;
**caractérisé en ce que**
une liste d'informations sur des terminaux est stockée dans le Hub Femto, ou une liste d'informations sur des terminaux est stockée dans un système de gestion de NodeB de rattachement, dit HMS, et le Hub Femto obtient des informations de la liste d'informations sur des terminaux auprès du HMS ;
laquelle liste d'informations sur des terminaux comprend des numéros courts de terminaux mobiles, des numéros longs de terminaux mobiles et des correspondances entre des numéros courts de terminaux mobiles et des numéros longs de terminaux mobiles, les numéros courts de terminaux mobiles étant les identificateurs des terminaux mobiles utilisés dans le réseau local, et les numéros longs de terminaux mobiles étant les identificateurs des terminaux mobiles utilisés dans un macro-réseau ;
l'identificateur du premier terminal mobile est le numéro court du premier terminal mobile ; et **en ce que**
s'il n'est pas possible de connecter le premier terminal mobile, le Hub Femto convertit l'identificateur du premier terminal mobile en le numéro long du premier terminal mobile conformément aux correspondances entre des numéros courts des terminaux mobiles et des numéros longs des terminaux mobiles dans la liste d'informations sur des terminaux, et utilise le numéro long du premier terminal mobile pour lancer une demande d'appel à destination d'un dispositif de coeur de réseau mobile d'un macro-réseau auquel le Hub Femto appartient, ou utilise le numéro long du premier terminal mobile pour lancer une demande d'appel à destination du commutateur privé, de sorte que le commutateur privé lance un appel pour le premier terminal mobile à destination d'un dispositif de coeur de réseau téléphonique de ligne fixe auquel le commutateur privé appartient.

2. Procédé de communication selon la revendication 1, **caractérisé en ce qu'**il comprend en outre les étapes consistant à :
recevoir, par le Hub Femto, une deuxième demande d'appel d'un deuxième terminal mobile envoyée par l'AP, la deuxième demande d'appel contenant un identificateur d'un deuxième terminal téléphonique de ligne fixe (701) ;
déterminer, par le Hub Femto, que le deuxième terminal mobile et le deuxième terminal téléphonique de ligne fixe se trouvent dans la zone de couverture du même réseau local (702) ;
effectuer, par le Hub Femto, une conversion de signalisation entre une signalisation de réseau mobile et une signalisation de réseau téléphonique de ligne fixe pour la deuxième demande d'appel au sein du réseau local (703) ; et
envoyer, par le Hub Femto, suite à la conversion de signalisation, la deuxième demande d'appel au commutateur privé, de sorte que le commutateur privé lance une demande d'appel à destination du deuxième terminal téléphonique de ligne fixe conformément à l'identificateur du deuxième terminal téléphonique de ligne fixe (704).

3. Procédé de communication selon la revendication 1, **caractérisé en ce que** :
la liste d'informations sur des terminaux comprend en outre des états de terminaux ; et **en ce que**
s'il est déterminé par le Hub Femto qu'il n'est pas possible de connecter le premier terminal mobile conformément aux états de terminaux dans la liste d'informations sur des terminaux, et si l'état du premier terminal mobile correspond à un état hors ligne, le Hub Femto détermine qu'il n'est pas possible de connecter le premier terminal mobile.

4. Procédé de communication selon la revendication 1, **caractérisé en ce que** :
l'étape consistant à déterminer, par le Hub Femto, que le premier terminal téléphonique de ligne fixe et le premier terminal mobile se trouvent dans la zone de couverture du même réseau local comprend les étapes consistant à :
déterminer, par le Hub Femto, si l'identificateur du premier terminal mobile se trouve dans la liste d'informations sur des terminaux et, le cas échéant, déterminer que le premier terminal téléphonique de ligne fixe et le premier terminal mobile se trouvent dans la zone de couverture du même réseau local ; et **en ce que**
l'étape consistant à déterminer, par le Hub Femto, que le deuxième terminal mobile et le deuxième terminal téléphonique de ligne fixe se trouvent dans la zone de couverture du même réseau local comprend les étapes consistant à :
déterminer, par le Hub Femto, si l'identificateur du deuxième terminal mobile se trouve dans la liste d'informations sur des terminaux et, le cas échéant, déterminer que le deuxième terminal téléphonique de ligne fixe et le deuxième terminal mobile se trouvent dans la zone de couverture du même réseau local.

5. Procédé de communication selon la revendication 1, **caractérisé en ce que** :
la liste d'informations sur des terminaux comprend en outre des états de terminaux ; **en ce que**
l'étape consistant à déterminer, par le Hub Femto, que le premier terminal téléphonique de ligne fixe et le premier terminal mobile se trouvent dans la zone de couverture du même réseau local comprend les étapes consistant à :
interroger, par le Hub Femto, la liste d'informations sur des terminaux en ce qui concerne l'état du premier terminal mobile conformément à l'identificateur du premier terminal mobile, et déterminer que le premier terminal téléphonique de ligne fixe et le premier terminal mobile se trouvent dans la zone de couverture du même réseau local si l'état du premier terminal mobile n'est pas un état hors ligne ; et **en ce que**
l'étape consistant à déterminer, par le Hub Femto, que le deuxième terminal mobile et le deuxième terminal téléphonique de ligne fixe se trouvent dans la zone de couverture du même réseau local comprend les étapes consistant à :
interroger, par le Hub Femto, la liste d'informations sur des terminaux en ce qui concerne l'état du deuxième terminal mobile conformément à l'identificateur du deuxième terminal mobile, et déterminer que le deuxième terminal téléphonique de ligne fixe et le deuxième terminal mobile se trouvent dans la zone de couverture du même réseau local si l'état du deuxième terminal mobile n'est pas un état hors ligne.

6. Procédé de communication selon la revendication 2, **caractérisé en ce qu'**il comprend en outre les étapes consistant à :
recevoir, par le Hub Femto, des données de plan utilisateur envoyées par le commutateur privé, convertir un format de média des données de plan utilisateur et envoyer à l'AP les données de plan utilisateur avec le format de média converti ; ou
recevoir, par le Hub Femto, des données de plan utilisateur envoyées par l'AP, convertir un format de média des données de plan utilisateur et envoyer au commutateur privé les données de plan utilisateur avec le format de média converti.

7. Procédé de communication selon la revendication 2, **caractérisé en ce qu'**il comprend en outre les étapes consistant à :
envoyer, par le Hub Femto, une demande d'appel pour le Hub Femto au commutateur privé, si un évanouissement de signal du premier terminal mobile remplit une condition préétablie au cours du processus de communication, de sorte que le commutateur privé crée une boucle d'appel comprenant le commutateur privé, un dispositif de coeur de réseau téléphonique de ligne fixe auquel le commutateur privé appartient, un dispositif de coeur de réseau mobile d'un macro-réseau auquel le Hub Femto appartient, une passerelle point d'accès et le Hub Femto, laquelle boucle d'appel est configurée pour créer une liaison de communication comprenant le premier terminal mobile, un dispositif de réseau d'accès du macro-réseau auquel le Hub Femto appartient, un dispositif de coeur de réseau du macro-réseau auquel le Hub Femto appartient, un dispositif de coeur de réseau téléphonique de ligne fixe auquel le commutateur privé appartient, le Hub Femto, le commutateur privé et le premier terminal téléphonique de ligne fixe ; ou
envoyer, par le Hub Femto, une demande d'appel pour le Hub Femto au commutateur privé, si un évanouissement de signal du deuxième terminal mobile remplit une condition préétablie au cours du processus de communication, de sorte que le commutateur privé crée une boucle d'appel comprenant le commutateur privé, un dispositif de coeur de réseau téléphonique de ligne fixe auquel le commutateur privé appartient, un dispositif de coeur de réseau mobile d'un macro-réseau auquel le Hub Femto appartient, une passerelle point d'accès et le Hub Femto, laquelle boucle d'appel est configurée pour créer une liaison de communication comprenant le deuxième terminal mobile, un dispositif de réseau d'accès du macro-réseau auquel le Hub Femto appartient, un dispositif de coeur de réseau du macro-réseau auquel le Hub Femto appartient, un dispositif de coeur de réseau téléphonique de ligne fixe auquel le commutateur privé appartient, le Hub Femto, le commutateur privé et le deuxième terminal téléphonique de ligne fixe.

8. Dispositif d'interconnexion cellulaire femto, dit Hub Femto, comprenant :
une première unité de réception de signalisation (1101), configurée pour recevoir une première demande d'appel d'un premier terminal téléphonique de ligne fixe envoyée par un commutateur privé, la première demande d'appel contenant un identificateur d'un premier terminal mobile ;
une première unité de détermination de signalisation (1102), configurée pour déterminer que le premier terminal téléphonique de ligne fixe et le premier terminal mobile se trouvent dans la zone de couverture du même réseau local ;
une première unité de conversion de signalisation (1103), configurée pour effectuer une conversion de signalisation entre une signalisation de réseau téléphonique de ligne fixe et une signalisation de réseau mobile pour la première demande d'appel au sein du réseau local ; et
une première unité d'envoi de signalisation (1104), configurée pour envoyer, suite à la conversion de signalisation, la première demande d'appel à un point d'accès, dit AP, dans un réseau mobile auquel le premier terminal mobile appartient, de sorte que l'AP lance une demande d'appel à destination du premier terminal mobile conformément à l'identificateur du premier terminal mobile ;
**caractérisé par**
une unité de stockage, configurée pour stocker une liste d'informations sur des terminaux ; ou
une unité d'obtention, configurée pour obtenir des informations d'une liste d'informations sur des terminaux auprès d'un système de gestion de NodeB de rattachement, dit HMS, laquelle liste d'informations sur des terminaux est stockée dans le HMS ;
laquelle liste d'informations sur des terminaux comprend des numéros courts de terminaux mobiles, des numéros longs de terminaux mobiles et des correspondances entre des numéros courts de terminaux mobiles et des numéros longs de terminaux mobiles, les numéros courts de terminaux mobiles étant les identificateurs des terminaux mobiles utilisés dans le réseau local, et les numéros longs de terminaux mobiles étant les identificateurs des terminaux mobiles utilisés dans un macro-réseau ;
le Hub Femto comprenant en outre une première unité de conversion de numéro long-court, configurée pour convertir l'identificateur du premier terminal mobile en le numéro long du premier terminal mobile conformément aux correspondances entre des numéros courts de terminaux mobiles et des numéros longs de terminaux mobiles dans la liste d'informations sur des terminaux, dans le cas où l'identificateur du premier terminal mobile correspond au numéro court du premier terminal mobile et où il n'est pas possible de connecter le premier terminal mobile ; et
une première unité de demande de lancement, configurée pour utiliser le numéro long du premier terminal mobile pour lancer une demande d'appel à destination d'un dispositif de coeur de réseau mobile d'un macro-réseau auquel le Hub Femto appartient.

9. Dispositif d'interconnexion cellulaire femto, dit Hub Femto, comprenant :
une première unité de réception de signalisation (1101), configurée pour recevoir une première demande d'appel d'un premier terminal téléphonique de ligne fixe envoyée par un commutateur privé, la première demande d'appel contenant un identificateur d'un premier terminal mobile ;
une première unité de détermination de signalisation (1102), configurée pour déterminer que le premier terminal téléphonique de ligne fixe et le premier terminal mobile se trouvent dans la zone de couverture du même réseau local ;
une première unité de conversion de signalisation (1103), configurée pour effectuer une conversion de signalisation entre une signalisation de réseau téléphonique de ligne fixe et une signalisation de réseau mobile pour la première demande d'appel au sein du réseau local ; et
une première unité d'envoi de signalisation (1104), configurée pour envoyer, suite à la conversion de signalisation, la première demande d'appel à un point d'accès, dit AP, dans un réseau mobile auquel le premier terminal mobile appartient, de sorte que l'AP lance une demande d'appel à destination du premier terminal mobile conformément à l'identificateur du premier terminal mobile ;
**caractérisé par**
une unité de stockage, configurée pour stocker une liste d'informations sur des terminaux ; ou
une unité d'obtention, configurée pour obtenir des informations d'une liste d'informations sur des terminaux auprès d'un système de gestion de NodeB de rattachement, dit HMS, laquelle liste d'informations sur des terminaux est stockée dans le HMS ;
laquelle liste d'informations sur des terminaux comprend des numéros courts de terminaux mobiles, des numéros longs de terminaux mobiles et des correspondances entre des numéros courts de terminaux mobiles et des numéros longs de terminaux mobiles, les numéros courts de terminaux mobiles étant les identificateurs des terminaux mobiles utilisés dans le réseau local, et les numéros longs de terminaux mobiles étant les identificateurs des terminaux mobiles utilisés dans un macro-réseau ;
le Hub Femto comprenant en outre une deuxième unité de conversion de numéro long-court, configurée pour convertir l'identificateur du premier terminal mobile en le numéro long du premier terminal mobile conformément aux correspondances entre des numéros courts de terminaux mobiles et des numéros longs des terminaux mobiles dans la liste d'informations sur des terminaux, dans le cas où l'identificateur du premier terminal mobile correspond au numéro court du premier terminal mobile et où il n'est pas possible de connecter le premier terminal mobile ; et
une deuxième unité de demande de lancement, configurée pour utiliser le numéro long du premier terminal mobile pour lancer une demande d'appel à destination du commutateur privé, de sorte que le commutateur privé lance un appel pour le premier terminal mobile à destination d'un dispositif de coeur de réseau téléphonique de ligne fixe auquel le commutateur privé appartient.

10. Hub Femto selon la revendication 8 ou 9, **caractérisé en ce qu'**il comprend en outre :
une deuxième unité de réception de signalisation (1105), configurée pour recevoir une deuxième demande d'appel d'un deuxième terminal mobile envoyée par l'AP, la deuxième demande d'appel contenant un identificateur d'un deuxième terminal téléphonique de ligne fixe ;
une deuxième unité de détermination de signalisation (1106), configurée pour déterminer que le deuxième terminal mobile et le deuxième terminal téléphonique de ligne fixe se trouvent dans la zone de couverture du même réseau local ;
une deuxième unité de conversion de signalisation (1107), configurée pour effectuer une conversion de signalisation entre une signalisation de réseau mobile et une signalisation de réseau téléphonique de ligne fixe pour la deuxième demande d'appel au sein du réseau local ; et
une deuxième unité d'envoi de signalisation (1108), configurée pour envoyer, suite à la conversion de signalisation, la deuxième demande d'appel au commutateur privé, de sorte que le commutateur privé lance une demande d'appel à destination du deuxième terminal téléphonique de ligne fixe conformément à l'identificateur du deuxième terminal téléphonique de ligne fixe.

11. Hub Femto selon la revendication 8 ou 9, **caractérisé en ce que** :
la liste d'informations sur des terminaux comprend en outre des états de terminaux ; et **en ce que** le Hub Femto comprend en outre :
une unité de détermination de non-connexion, configurée pour déterminer qu'il n'est pas possible de connecter le premier terminal mobile conformément aux états de terminaux dans la liste d'informations sur des terminaux, si l'état du premier terminal mobile est un état hors ligne.

12. Hub Femto selon la revendication 10, **caractérisé en ce que** :
la première unité de détermination de signalisation (1102) est configurée pour déterminer si l'identificateur du premier terminal mobile se trouve dans la liste d'informations sur des terminaux et, le cas échéant, déterminer que le premier terminal téléphonique de ligne fixe et le premier terminal mobile se trouvent dans la zone de couverture du même réseau local ; et **en ce que**
la deuxième unité de détermination de signalisation (1106) est configurée pour déterminer si l'identificateur du deuxième terminal mobile se trouve dans la liste d'informations sur des terminaux et, le cas échéant, déterminer que le deuxième terminal téléphonique de ligne fixe et le deuxième terminal mobile se trouvent dans la zone de couverture du même réseau local.

13. Hub Femto selon la revendication 8 ou 9, **caractérisé en ce que** :
la liste d'informations sur des terminaux comprend en outre des états de terminaux ; **en ce que**
la première unité de détermination de signalisation (1102) est configurée pour interroger la liste d'informations sur des terminaux en ce qui concerne l'état du premier terminal mobile conformément à l'identificateur du premier terminal mobile, et déterminer que le premier terminal téléphonique de ligne fixe et le premier terminal mobile se trouvent dans la zone de couverture du même réseau local si l'état du premier terminal mobile n'est pas un état hors ligne ; et **en ce que**
la deuxième unité de détermination de signalisation (1106) est configurée pour interroger la liste d'informations sur des terminaux en ce qui concerne l'état du deuxième terminal mobile conformément à l'identificateur du deuxième terminal mobile, et déterminer que le deuxième terminal téléphonique de ligne fixe et le deuxième terminal mobile se trouvent dans la zone de couverture du même réseau local si l'état du deuxième terminal mobile n'est pas un état hors ligne.

14. Hub Femto selon la revendication 10, **caractérisé en ce que** :
le Hub Femto comprend en outre :
une première unité de réception de données (1201), configurée pour recevoir des données de plan utilisateur envoyées par le commutateur privé ;
une première unité de conversion de données (1202), configurée pour convertir un format de média des données de plan utilisateur reçues par la première unité de réception de données ; et
une première unité d'envoi de données (1203), configurée pour envoyer à l'AP les données de plan utilisateur avec le format de média converti ;
ou **en ce que** le Hub Femto comprend en outre :
une deuxième unité de réception de données (1211), configurée pour recevoir des données de plan utilisateur envoyées par l'AP ;
une deuxième unité de conversion de données (1212), configurée pour convertir un format de média des données de plan utilisateur reçues par la deuxième unité de réception de données ; et
une deuxième unité d'envoi de données (1213), configurée pour envoyer au commutateur privé les données de plan utilisateur avec le format de média converti.

15. Hub Femto selon la revendication 10, **caractérisé en ce que** :
le Hub Femto comprend en outre :
une première unité d'appel analogique, configurée pour envoyer une demande d'appel pour le Hub Femto au commutateur privé, si un évanouissement de signal du premier terminal mobile remplit une condition préétablie au cours du processus de communication, de sorte que le commutateur privé crée une boucle d'appel comprenant le commutateur privé, un dispositif de coeur de réseau téléphonique de ligne fixe auquel le commutateur privé appartient, un dispositif de coeur de réseau mobile d'un macro-réseau auquel le Hub Femto appartient, une passerelle point d'accès et le Hub Femto, laquelle boucle d'appel est configurée pour créer une liaison de communication comprenant le premier terminal mobile, un dispositif de réseau d'accès du macro-réseau auquel le Hub Femto appartient, un dispositif de coeur de réseau du macro-réseau auquel le Hub Femto appartient, un dispositif de coeur de réseau téléphonique de ligne fixe auquel le commutateur privé appartient, le Hub Femto, le commutateur privé et le premier terminal téléphonique de ligne fixe ;;
ou **en ce que** le Hub Femto comprend en outre :
une deuxième unité d'appel analogique, configurée pour envoyer une demande d'appel pour le Hub Femto au commutateur privé, si un évanouissement de signal du deuxième terminal mobile remplit une condition préétablie au cours du processus de communication, de sorte que le commutateur privé crée une boucle d'appel comprenant le commutateur privé, un dispositif de coeur de réseau téléphonique de ligne fixe auquel le commutateur privé appartient, un dispositif de coeur de réseau mobile d'un macro-réseau auquel le Hub Femto appartient, une passerelle point d'accès et le Hub Femto, laquelle boucle d'appel est configurée pour créer une liaison de communication comprenant le deuxième terminal mobile, un dispositif de réseau d'accès du macro-réseau auquel le Hub Femto appartient, un dispositif de coeur de réseau du macro-réseau auquel le Hub Femto appartient, un dispositif de coeur de réseau téléphonique de ligne fixe auquel le commutateur privé appartient, le Hub Femto, le commutateur privé et le deuxième terminal téléphonique de ligne fixe.
